# EUROPEAN PATENT APPLICATION

(11) **EP 4 618 571 A1**
(43) Date of publication of application: **17.09.2025**
(21) Application number: 23900876.6
(22) Date of filing: 18.10.2023
(51) Int. Cl.: H04N 23/52, H04N 23/51, H04N 23/55, G03B 5/00, G03B 3/10, G03B 13/36, G03B 17/12

(54) **CAMERA LENS MODULE AND ELECTRONIC DEVICE INCLUDING SAME**

(30) Priority: 07.12.2022 KR 20220170007
(71) Applicant: Samsung Electronics Co., Ltd., Suwon-si, Gyeonggi-do 16677 (KR)
(72) Inventor: NGUYEN, Duc Hung, Bac Ninh Province 16000 (VN); NGUYEN, Tien Dac, Bac Ninh Province 16000 (VN); LE, Duc Huong, Bac Ninh Province 16000 (VN); LE, Hong Viet, Bac Ninh Province 16000 (VN); NGUYEN, Thi Thu, Bac Ninh Province 16000 (VN); PHAM, Quang Thai, Bac Ninh Province 16000 (VN); TRIEU, Duy Hoang, Bac Ninh Province 16000 (VN); VU, Van Thai, Bac Ninh Province 16000 (VN)
(74) Representative: Gulde & Partner
(86) International application number: PCT/KR2023/016130
(87) International publication number: WO 2024/122855

(57) **Abstract**

An electronic device according to an embodiment may comprise: a housing; and at least one camera lens module disposed in the housing, wherein the camera lens module may include: a cover member; a camera housing which is assembled with the cover member and in which are accommodated a lens module including at least one lens and having a lens barrel including at least one support formed at one end thereof, and a lens driving part disposed to surround the lens module and providing power for self-focusing and image stabilization of the lens module; an inner housing having a filter disposed therein, assembled with the camera housing, and including at least one contact area in contact with the support; a printed circuit board coupled to the camera housing and facing the filter; and a dust trap disposed between the inner housing, wherein the dust trap may include at least one step formed on the contact area, covering the contact area, and having a shape corresponding to the shape of the support.

## Description

### [Technical Field]

The disclosure relates to an electronic device, and more particularly, to at least one camera lens module arranged in a front surface or rear surface of an electronic device.

### [Background Art]

Electronic devices such as mobile devices can be classified into bar types, folding types, and slider types according to their external appearances. This type of electronic device can include at least one camera lens module arranged in a front surface or rear surface of the electronic device. The camera lens module can be used for photographing a subject, and can also be used for making videos that support video functions such as video calls.

The camera lens module can include a camera housing and a lens assembly to create an image of an object on an image sensor, and this can store the image electronically. An optical path can be defined at least partially along an optical axis of a lens between the lens of the camera lens module and the image sensor.

In addition, the camera lens module can include a filter disposed on the optical path between the image sensor and the lens and blocking light of a specific wavelength from entering the image sensor. The image sensor arranged in the camera lens module can be protected from the outside by the lens housing.

### [Disclosure of Invention]

### [Technical Problem]

However, the camera lens module can cause scratches and dark spots on the image sensor because interfering with the operation of the image sensor, for example, interfering with a path of light to the image sensor, due to the generation of a particle source in an inner space where the image sensor is arranged.

According to various embodiments of the disclosure, there are provided a camera lens module including a dustproof structure capable of preventing various types of dust or particles from entering an inner space where the camera lens module is arranged, and an electronic device including the same.

### [Solution to Problem]

An electronic device of an embodiment may include a housing, and at least one camera lens module arranged in the housing. The camera lens module may include a cover member, a camera housing assembled with the cover member and configured to accommodate a lens module which comprises at least one lens and has a lens barrel comprising at least one support stand formed at one end and a lens driving unit which is arranged to surround the lens module and presents power for performing self-focusing and optical image stabilization of the lens module, an inner housing having a filter arranged therein, assembled with the camera housing, and comprising at least one contact region contacting the support stand, a printed circuit board coupled to the camera housing and facing the filter, and a dust trap arranged between the inner housing. The dust trap may include at least one stepped portion formed in the contact region and configured to cover the contact region, and comprising a shape corresponding to the shape of the support stand.

### [Advantageous Effects of Invention]

According to a dustproof structure of the disclosure, it may solve a problem of causing stains in a captured image and deteriorating an image quality, by preventing dust or foreign substances from entering an inner space of a lens barrel where an image sensor of a camera lens module is arranged.

### [Brief Description of Drawings]

FIG. 1 is a block diagram of an electronic device in a network environment according to various embodiments.
FIG. 2A to FIG. 2C are diagrams illustrating a foldable electronic device of a folded state according to an embodiment, wherein FIG. 2A is a perspective view, FIG. 2B is a front view, and FIG. 2C is a rear view.
FIGS. 3A to 3C are diagrams illustrating a foldable electronic device of a 180-degree unfolded state according to an embodiment, wherein FIG. 3A is a perspective view, FIG. 3B is a front view, and FIG. 3C is a rear view.
FIG. 4 is an assembled perspective view illustrating a camera lens module according to an embodiment of the disclosure.
FIG. 5A is an exploded perspective view illustrating a camera lens module according to an embodiment of the disclosure.
FIG. 5B is a perspective view illustrating a state in which a lens housing of a camera lens module is separated from a lens driving unit according to an embodiment of the disclosure.
FIG. 5C is a perspective view illustrating a state in which a camera housing of a camera lens module is assembled to an inner housing according to an embodiment of the disclosure.
FIG. 6 is a perspective view illustrating a cover member according to an embodiment of the disclosure.
FIG. 7A is a perspective view illustrating a state in which a camera housing is viewed from above according to an embodiment of the disclosure.
FIG. 7B is a perspective view illustrating a state in which a camera housing is viewed from below according to an embodiment of the disclosure.
FIG. 8 is a perspective view illustrating a printed circuit board in which another sensor is arranged according to an embodiment of the disclosure.
FIG. 9A is a perspective view illustrating a state in which a lens module is viewed from above according to an embodiment of the disclosure.
FIG. 9B is a perspective view illustrating a state in which a lens module is viewed from below according to an embodiment of the disclosure.
FIG. 9C is a side view of a lens module according to an embodiment of the disclosure.
FIG. 9D is a cross-sectional view of a lens module according to an embodiment of the disclosure.
FIG. 10 is a perspective view illustrating an inner housing in which a filter is seated according to an embodiment of the disclosure.
FIG. 11 is a perspective view illustrating an inner housing according to an embodiment of the disclosure.
FIG. 12 is a plan view illustrating a camera lens module according to an embodiment of the disclosure.
FIG. 13 is a cross-sectional view taken along line A-A' of FIG. 12.
FIG. 14 is a cross-sectional view taken along line B-B' of FIG. 12.
FIG. 15 is a plan view illustrating a state in which a support stand is located on a surface of an inner housing in which a filter is arranged according to an embodiment of the disclosure.
FIG. 16 is a plan view illustrating a movement region of a lens barrel on a surface of an inner housing according to an embodiment of the disclosure.
FIG. 17 is a plan view illustrating a contact region of a support stand on a surface of an inner housing according to an embodiment of the disclosure.
FIG. 18 is a cross-sectional view illustrating a state in which an inclined surface of a stepped portion of an inner housing is a curved surface and a state in which an inclined surface of a support stand is a curved surface according to an embodiment of the disclosure, and is an exemplary diagram illustrating each movement state of the support stand.
FIGS. 19 to 22 are plan views each illustrating the shape of a stepped portion according to various embodiments of the disclosure.
FIGS. 23 to 25 are plan views each illustrating the arrangement structure of a support stand according to various embodiments of the disclosure.
FIG. 26 is a cross-sectional view illustrating a state in which an inclined surface of a stepped portion of an inner housing is a flat surface and a state in which an end of a support stand is a curved surface according to an embodiment of the disclosure.
FIG. 27 is a cross-sectional view illustrating a state in which an inclined surface of a support stand is a flat surface according to an embodiment of the disclosure.
FIGS. 28A to 28C are exemplary diagrams each illustrating a balance area being based on the structure of various support stands according to an embodiment of the disclosure.
FIG. 29 is a flowchart sequentially illustrating an assembly process of a camera lens module according to an embodiment of the disclosure.
FIG. 30 is a perspective view illustrating an inner housing to which a stepped portion is assembled according to an embodiment of the disclosure.
FIG. 31 is a perspective view illustrating before and after assembling a stepped portion to an inner housing according to an embodiment of the disclosure.
FIG. 32 is a perspective view illustrating an inner housing from which a stepped portion is removed according to an embodiment of the disclosure.
FIG. 33 is an enlarged perspective view illustrating a seating portion of an inner housing according to an embodiment of the disclosure.
FIG. 34 is a cross-sectional view illustrating each structure of an inner housing taken along lines A-A' and B-B' according to an embodiment of the disclosure.
FIG. 35 is a cross-sectional view illustrating a state in which a stepped portion is seated in a seated groove according to an embodiment of the disclosure.
FIG. 36A is a perspective view illustrating a first stepped portion and a second stepped portion according to an embodiment of the disclosure.
FIG. 36B is an enlarged perspective view illustrating a stepped portion according to an embodiment of the disclosure.
FIG. 37 is a cross-sectional view illustrating a stepped portion according to an embodiment of the disclosure.
FIG. 38 is an enlarged plan view illustrating a seating portion according to an embodiment of the disclosure.
FIG. 39A is a cross-sectional view illustrating the structure of a state in which a stepped portion is coupled to the seating portion taken along line A-A' according to an embodiment of the disclosure.
FIG. 39B is a cross-sectional view illustrating the structure of a state in which a stepped portion is coupled to the seating portion taken along line B-B' according to an embodiment of the disclosure.
FIG. 40 is an enlarged plan view illustrating a seating portion according to an embodiment of the disclosure.
FIG. 41A is a cross-sectional view illustrating the structure of a state in which a stepped portion is coupled to the seating portion taken along line A-A' according to an embodiment of the disclosure.
FIG. 41B is a cross-sectional view illustrating the structure of a state in which a stepped portion is coupled to the seating portion taken along line B-B' according to an embodiment of the disclosure.

In relation to the description of the drawings, identical or similar reference numerals may be used for identical or similar components.

### [Mode for the Invention]

Various embodiments of the disclosure are described below with reference to the accompanying drawings. However, these are not intended to limit the disclosure to specific embodiment forms, and should be understood as including various modifications, equivalents, and/or alternatives of the embodiments of the disclosure.

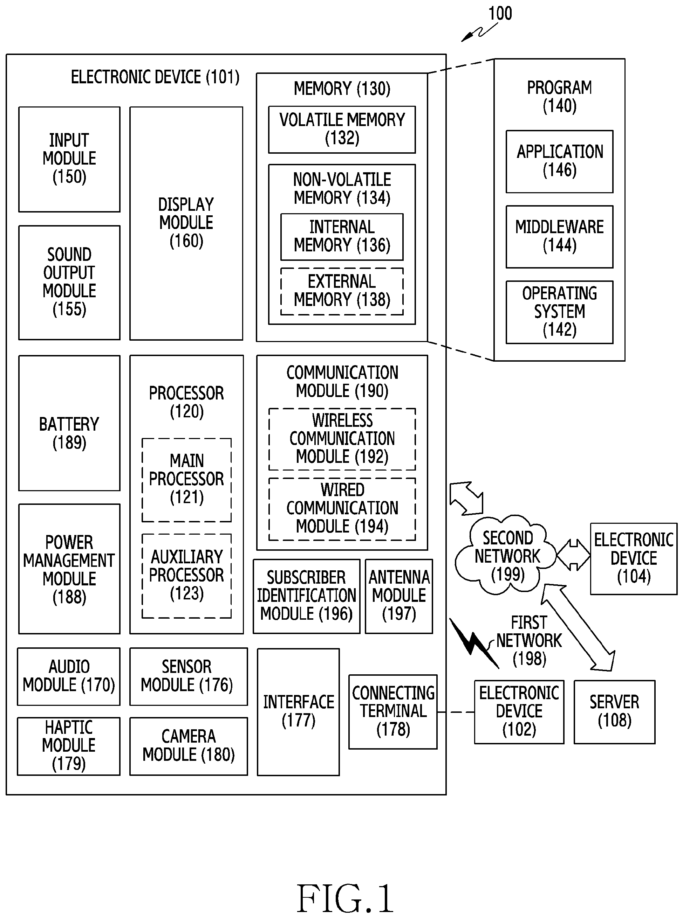

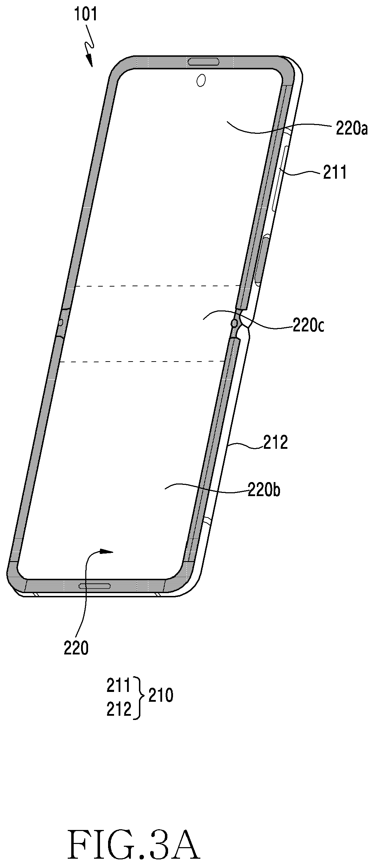

Referring to FIGS. 1 to 3C, a camera module of an embodiment may be applied to various types of electronic devices, for example, bar type, folding type, or slider type electronic devices. Hereinafter, a description will be made based on an embodiment applied to the folding type electronic device.

FIG. 1 is a block diagram of an electronic device in a network environment, according to various embodiments.

Referring to FIG. 1, in the network environment 100, the electronic device 101 may communicate with an electronic device 102 through a first network 198 (e.g., short-distance wireless communication network), or communicate with an electronic device 104 or a server 108 through a second network 199 (e.g., long-distance wireless communication network). According to an embodiment, the electronic device 101 may communicate with the electronic device 104 through the server 108. According to an embodiment, the electronic device 101 may include a processor 120, a memory 130, an input device 150, an audio output device 155, a display device 160, an audio module 170, a sensor module 176, an interface 177, a haptic module 179, a camera module 180, a power management module 188, a battery 189, a communication module 190, a subscriber identification module 196, or an antenna module 197. In some embodiment, in the electronic device 101, at least one (e.g., display device 160 or camera module 180) of these components may be omitted, or one or more other components may be added. In some embodiment, some of these components may be implemented as a single integrated circuit. For example, the sensor module 176 (e.g., fingerprint sensor, iris sensor, or illumination sensor) may be implemented as embedded in the display device 160 (e.g., display).

The processor 120 may, for example, execute software (e.g., program 140) and control at least one other component (e.g., hardware or software component) of the electronic device 101 connected to the processor 120, and may perform various data processing or operations. According to an embodiment, the processor 120 may load, as at least part of data processing or operation, a command or data received from other components (e.g., sensor module 176 or communication module 190) to a volatile memory 132, process the command or data stored in the volatile memory 132, and store the result data in a non-volatile memory 134. According to an embodiment, the processor 120 may include a main processor 121 (e.g., central processing unit or application processor), or an auxiliary processor 123 (e.g., graphic processing unit, image signal processor, sensor hub processor, or communication processor) operable independently of or together with this. Additionally or alternatively, the auxiliary processor 123 may be set to use less power than the main processor 121 or specialize in a specified function. The auxiliary processor 123 may be implemented separately from or as part of the main processor 121.

The auxiliary processor 123 may, for example, control at least some of functions or states related to at least one (e.g., display device 160, sensor module 176, or communication module 190) of the components of the electronic device 101, instead of the main processor 121 while the main processor 121 is in an inactive (e.g., sleep) state, or together with the main processor 121 while the main processor 121 is in an active (e.g., application running) state. According to an embodiment, the auxiliary processor 123 (e.g., image signal processor or communication processor) may be implemented as part of other functionally related components (e.g., camera module 180 or communication module 190).

The memory 130 may store various data used by at least one component (e.g., processor 120 or sensor module 176) of the electronic device 101. The data may include, for example, software (e.g., program 140), and input data or output data for a command related to this. The memory 130 may include the volatile memory 132 or the non-volatile memory 134.

The program 140 may be stored as software in the memory 130, and may include, for example, an operating system 142, middleware 144, or an application 146.

The input device 150 may receive a command or data to be used by the component (e.g., processor 120) of the electronic device 101 from the outside (e.g., user) of the electronic device 101. The input device 150 may include, for example, a microphone, a mouse, a keyboard, a key (e.g., button), or a digital pen (e.g., stylus pen).

The sound output device 155 may output sound signals to the outside of the electronic device 101. The sound output device 155 may include, for example, a speaker or a receiver. The speaker may be used for general purposes such as multimedia playback or recording playback, and the receiver may be used to receive incoming calls. According to an embodiment, the receiver may be implemented separately from or as part of the speaker.

The display device 160 may visually present information to the outside (e.g., user) of the electronic device 101. The display device 160 may include, for example, a display, a hologram device, or a projector and a control circuit for controlling the corresponding device. In an embodiment, the display device 160 may include a touch circuitry set to detect a touch, or a sensor circuitry (e.g., pressure sensor) set to measure the intensity of a force provided by the touch.

The audio module 170 may convert a sound into an electrical signal, or vice versa. According to an embodiment, the audio module 170 may acquire a sound through the input device 150, or output a sound through the sound output device 155 or an external electronic device (e.g., electronic device 102) (e.g., speaker or headphone) connected directly or wirelessly to the electronic device 101.

The sensor module 176 may detect an operating state (e.g., power or temperature) of the electronic device 101 or an external environmental state (e.g., user state), and provide an electrical signal or data value corresponding to the detected state. According to an embodiment, the sensor module 176 may include, for example, a gesture sensor, a gyro sensor, an air pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used to directly or wirelessly connect the electronic device 101 to the external electronic device (e.g., electronic device 102). According to an embodiment, the interface 177 may include, for example, a high definition multimedia interface (HDMI), a universal serial bus (USB) interface, an SD card interface, or an audio interface.

The connection terminal 178 may include a connector through which the electronic device 101 may be physically connected to the external electronic device (e.g., electronic device 102). According to an embodiment, the connection terminal 178 may include, for example, an HDMI connector, a USB connector, an SD card connector, or an audio connector (e.g., headphone connector).

The haptic module 179 may convert an electrical signal into a mechanical stimulus (e.g., vibration or movement) or an electrical stimulus that a user may perceive through a tactile or kinesthetic sense. According to an embodiment, the haptic module 179 may include, for example, a motor, a piezoelectric element, or an electrical stimulation device.

The camera module 180 may capture still images and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of a power management integrated circuit (PMIC), for example.

The battery 189 may supply power to at least one component of the electronic device 101. According to an embodiment, the battery 189 may include, for example, a non-rechargeable primary battery, a rechargeable secondary battery, or a fuel cell.

The communication module 190 may support the establishment of a direct (e.g., wired) communication channel or a wireless communication channel between the electronic device 101 and the external electronic device (e.g., electronic device 102, electronic device 104, or server 108), and communication execution through the established communication channel. The communication module 190 may include one or more communication processors that operate independently of the processor 120 (e.g., application processor) and support direct (e.g., wired) communication or wireless communication. According to an embodiment, the communication module 190 may include a wireless communication module 192 (e.g., cellular communication module, short-range wireless communication module, or global navigation satellite system (GNSS) communication module) or a wired communication module 194 (e.g., local area network (LAN) communication module or power line communication module). Among these communication modules, the corresponding communication module may communicate with the external electronic device via the first network 198 (e.g., short-range communication network such as Bluetooth, WiFi direct, or infrared data association (IrDA)) or the second network 199 (e.g., long-range communication network such as cellular network, Internet, or computer network (e.g., LAN or WAN)). These various types of communication modules may be integrated as one component (e.g., single chip), or be implemented as a plurality of separate components (e.g., multiple chips). The wireless communication module 192 may identify or authenticate the electronic device 101 within a communication network such as the first network 198 or the second network 199, by using subscriber information (e.g., international mobile subscriber identifier (IMSI)) stored in the subscriber identification module 196.

The antenna module 197 may transmit or receive signals or power from the outside (e.g., external electronic device). According to an embodiment, the antenna module 197 may include an antenna including a radiator that is formed of a conductor or conductive pattern formed on a substrate (e.g., PCB). According to an embodiment, the antenna module 197 may include a plurality of antennas. In this case, at least one antenna suitable for a communication method used in a communication network such as the first network 198 or the second network 199 may be selected from the plurality of antennas by the communication module 190, for example. A signal or power may be transmitted or received between the communication module 190 and the external electronic device through the selected at least one antenna. According to some embodiment, components (e.g., RFIC) other than the radiator may be additionally formed as part of the antenna module 197.

At least some of the components may be connected to each other through a communication method (e.g., bus, general purpose input and output (GPIO), serial peripheral interface (SPI), or mobile industry processor interface (MIPI)) between peripheral devices, and exchange signals (e.g., commands or data) with each other.

According to an embodiment, commands or data may be transmitted or received between the electronic device 101 and the external electronic device 104 through the server 108 connected to the second network 199. The electronic device 102 or 104 each may be a device of the same or different type from the electronic device 101. According to an embodiment, all or some of the operations performed by the electronic device 101 may be executed by one or more of the external electronic devices 102, 104, or 108. For example, when the electronic device 101 needs to perform a certain function or service automatically or in response to a request from a user or another device, the electronic device 101 may request one or more external electronic devices to perform at least part of the function or service, instead of or additionally to executing the function or service on its own. The one or more external electronic devices receiving the request may execute at least part of the requested function or service, or an additional function or service related to the request, and transmit the execution result to the electronic device 101. The electronic device 101 may process the result as it is or additionally, and present it as at least part of a response to the request. For this purpose, a cloud computing, distributed computing, or client-server computing technology may be used, for example.

The electronic device of various embodiments disclosed in this document may include various types of devices. The electronic device may include, for example, a portable communication device (e.g., smartphone), a computer device, a portable multimedia device, a portable medical device, a camera, a wearable device, or a home appliance. The electronic device of an embodiment of this document is not limited to the above-described devices.

Various embodiments of this document and terms used herein are not intended to limit the technical features described in this document to specific embodiments, but should be understood as including various modifications, equivalents, or alternatives of a corresponding embodiment. In relation to the description of the drawings, similar reference numerals may be used for similar or related components. The singular form of a noun corresponding to an item may include a single or plurality of items, unless the relevant context clearly indicates otherwise. In this document, each of phrases such as "A or B", "at least one of A and B", "at least one of A or B", "A, B or C", "at least one of A, B and C", and "at least one of A, B, or C" may include any one of items listed together in a corresponding phrase among the phrases, or any possible combination thereof. Terms such as "first", "second", "firstly" or "secondly" may be used simply to distinguish one component from another component, and do not limit the corresponding components in other respects (e.g., importance or order). When some (e.g., first) component is mentioned to be "coupled" or "connected" to another (e.g., second) component, with or without the term "functionally" or "communicatively", it means that some component may be connected to another component directly (e.g., wiredly), wirelessly, or through a third component.

The term "module" used in this document may include a unit implemented in hardware, software, or firmware, and may be used interchangeable with a term such as a logic, a logic block, a component, or a circuit, for example. The module may be an integrated component, or a minimum unit of the component or part thereof performing one or more functions. For example, according to an embodiment, the module may be implemented in the form of an application-specific integrated circuit (ASIC).

Various embodiments of this document may be implemented as software (e.g., program 140) that includes one or more instructions stored in a storage medium (e.g., internal memory 136 or external memory 138) that is readable by a machine (e.g., electronic device 101). For example, a processor (e.g., processor 120) of the machine (e.g., electronic device 101) may call at least one instruction among the stored one or more instructions from the storage medium, and execute it. This enables the machine to be operated to perform at least one function according to the called at least one instruction. The one or more instructions may include a code provided by a compiler or a code executable by an interpreter. The machine-readable storage medium may be presented in the form of a non-transitory storage medium. Here, 'non-transitory' only means that the storage medium is a tangible device and does not include a signal (e.g., electromagnetic wave). This term does not distinguish a case where data is stored semi-permanently in the storage medium and a case where data is stored temporarily.

According to an embodiment, a method of various embodiments disclosed in this document may be included, and presented, in a computer program product. The computer program product may be traded as merchandise between a seller and a buyer. The computer program product may be distributed in the form of a machine-readable storage medium (e.g., compact disc read only memory (CD-ROM)), or be distributed (e.g., downloaded or uploaded) through an application store (e.g., Play Store^{™}), or directly, online between two user devices (e.g., smartphones). In the online distribution, at least part of the computer program product may be at least temporarily stored in the machine-readable storage medium such as a memory of a manufacturer's server, an application store's server, or a relay server, or be temporarily provided.

According to various embodiments, each component (e.g., module or program) of the components described above may include a single or plurality of entities. According to various embodiments, one or more of the components or operations described above may be omitted, or one or more other components or operations may be added. Alternatively or additionally, a plurality of components (e.g., modules or programs) may be integrated into a single component. In this case, the integrated component may perform one or more functions of each of the plurality of components, identically or similarly to those performed by the corresponding component among the plurality of components prior to the integration. According to various embodiments, operations performed by a module, program, or another component may be executed sequentially, in parallel, iteratively, or heuristically, or one or more of the operations may be executed in a different order or be omitted, or one or more other operations may be added.

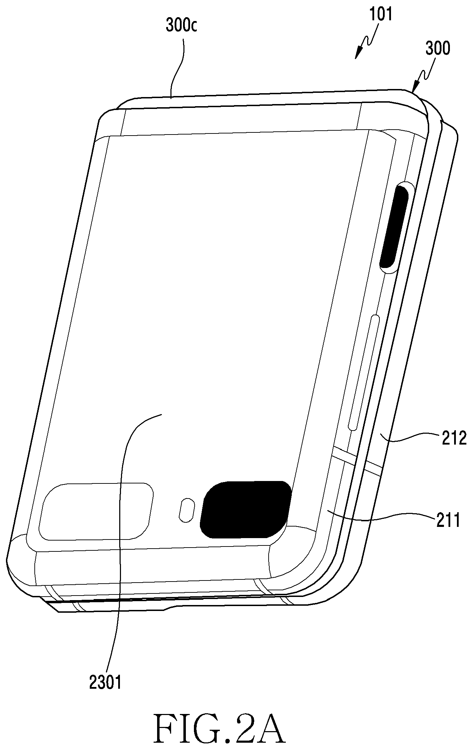

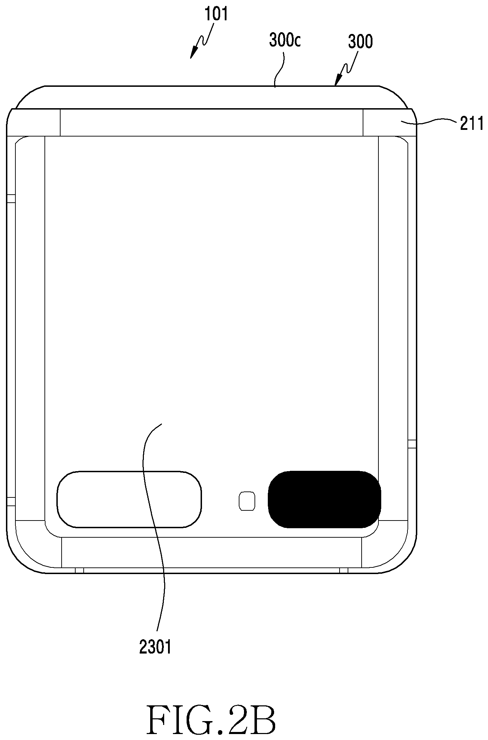

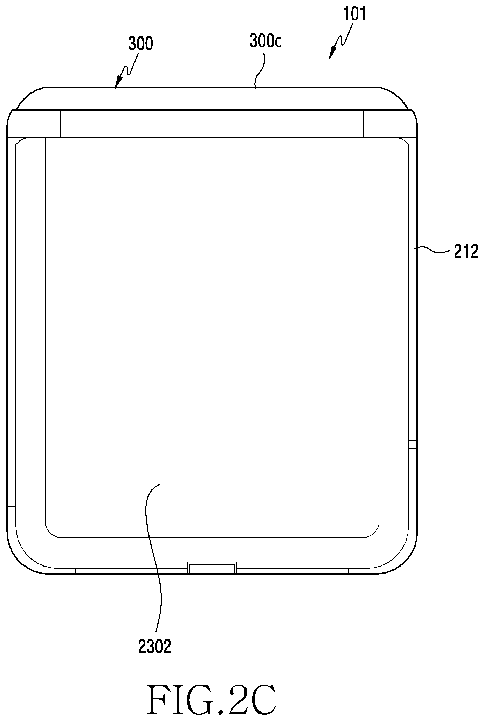

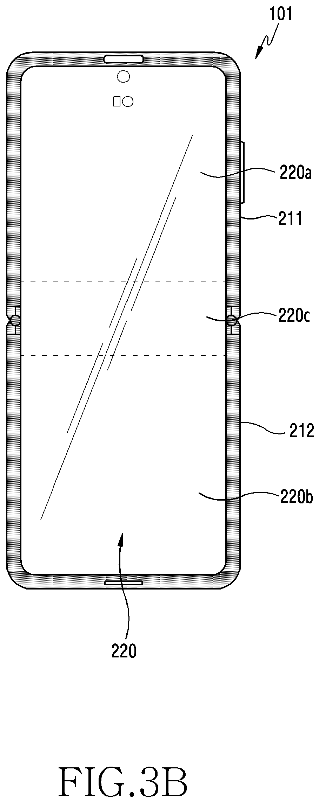

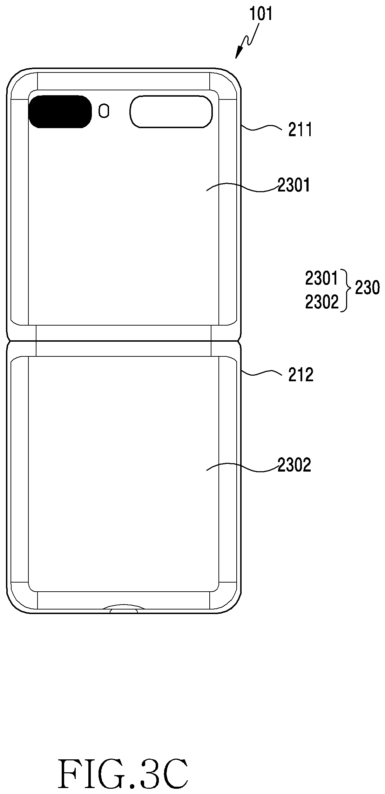

FIGS. 2A to 2C are diagrams illustrating a foldable electronic device of a folded state according to an embodiment, wherein FIG. 2A is a perspective view, FIG. 2B is a front view, and FIG. 2C is a rear view. FIGS. 3A to 3C are diagrams illustrating a foldable electronic device in a 180-degree unfolded state according to an embodiment, wherein FIG. 3A is a perspective view, FIG. 3B is a front view, and FIG. 3C is a rear view.

Referring to FIGS. 2A to 3C, an electronic device 101 (e.g., electronic device 101 of FIG. 1) of an embodiment may include a foldable housing 210 (or "housing") including a first housing 211 and a second housing 212, a flexible display 220, a hinge assembly 300, and a cover 230 (or "rear cover"). According to an embodiment, the cover 230 may include a first cover 2301 included in the first housing 211, and a second cover 2302 included in the second housing 212.

According to an embodiment, the first housing 211 and the second housing 212 may form a space in which electronic components (e.g., printed circuit board, battery, processor, etc.) of the electronic device 101 may be arranged, and form a side surface of the electronic device 101. As an example, various types of components for performing various functions of the electronic device 101 may be arranged inside the first housing 211 and the second housing 212. For example, electronic components such as a front camera, a receiver, and a sensor (e.g., proximity sensor) may be arranged inside the first housing 211 and the second housing 212. Although not shown in the drawing, the above-described electronic components may be exposed on a front surface of the electronic device 101 through at least one opening 220d or recess prepared on the flexible display 220.

As an example, when the electronic device 101 is in an unfolded state, the first housing 211 and the second housing 212 may be arranged parallel to each other. As another example, when the electronic device 101 is in a folded state, the first housing 211 may be arranged to rotationally move (or rotate) relative to the second housing 212 and allow one surface of the first housing 211 to face one surface of the second housing 212.

According to an embodiment, the first housing 211 and the second housing 212 may form a recess that accommodates the flexible display 220, and the flexible display 220 may be seated in the recess and supported by the first housing 211 and the second housing 212. According to another embodiment, the flexible display 220 may be supported by a first support plate and/or a second support plate located between the flexible display 220 and the first housing 211 and the second housing 212. The first housing 211 and the second housing 212 may be formed of a metal material and/or a non-metal material having a specified rigidity and supporting the flexible display 220.

According to an embodiment, the flexible display 220 may be arranged on the first housing 211 and the second housing 212, and form the front surface of the electronic device 101 when the electronic device 101 is in an unfolded state. That is, the flexible display 220 may be arranged to extend from one region of the first housing 211 to at least one region of the second housing 212 across the hinge assembly 300. According to an embodiment, the flexible display 220 may be seated in the recess formed by the first housing 211 and the second housing 212, and be arranged on the first housing 211 and the second housing 212.

In an example, the flexible display 220 may include a first region 220a corresponding to at least one region of the first housing 211, a second region 220b corresponding to at least one region of the second housing 212, and a folding region 220c located between the first region 220a and the second region 220b and having a flexible characteristic. However, the disclosure is not limited to the above-described embodiment, and according to an embodiment, the first region 220a, the second region 220b, and the folding region 220c of the flexible display 220 may be all formed to have a flexible characteristic as well. In an example, the first region 220a, the folding region 220c, and the second region 220b may be arranged in parallel facing the same direction when the electronic device 101 is in an unfolded state. In contrast, when the electronic device 101 is in a folded state, the folding region 220c may be bent and arranged wherein the first region 220a faces the second region 220b.

According to an embodiment, at least one region (e.g., first region 220a or second region 220b) of the flexible display 220 may be attached to one surface of the first housing 211 and one surface of the second housing 212. According to another embodiment, the flexible display 220 may be attached to one surface of the first housing 211 and one surface of the second housing 212 through the support plates located between the flexible display 220 and the first housing 211 and the second housing 212.

According to an embodiment, the hinge assembly 300 may connect the first housing 211 to the second housing 212, and rotate the second housing 212 within a specified rotation range, based on the first housing 211, or conversely, rotate the first housing 211 within a specified rotation range, based on the second housing 212.

In an example, a recess 211c may be formed in a region where the first housing 211 is connected to the second housing 212, and the hinge assembly 300 may be arranged between the first housing 211 and the second housing 212. The above-described recess 211c may be formed in a groove shape having a defined curvature as an example, but is not limited thereto.

According to an embodiment, a hinge housing 300c may be arranged between the first housing 211 and the second housing 212, and the hinge assembly 300 may be assembled to the hinge housing 300c.

According to an embodiment, the hinge housing 300c may be visible to the outside of the electronic device 101 or covered by the foldable housing 210, depending on the state of the electronic device 101. As an example (e.g., see FIG 3C), when the electronic device 101 is in an unfolded state, the hinge housing 300c may be covered by the foldable housing 210 and not be visible to the outside of the electronic device 101. As another example (e.g., see FIGS. 2A to 2C), when the electronic device 101 is in a folded state, the hinge housing 300c may be visible to the outside of the electronic device 101 by the rotation of the first housing 211 and the second housing 212.

In an example, the cover 230 may be located at a lower end of the first housing 211 and the second housing 212 and form a rear surface of the electronic device 101. As an example, the cover 230 may include the first cover 2301 coupled to the first housing 211 and the second cover 2302 coupled to the second housing 212. As another example, the first cover and the first housing 211 may be formed integrally, and the second cover and the second housing 212 may also be formed integrally.

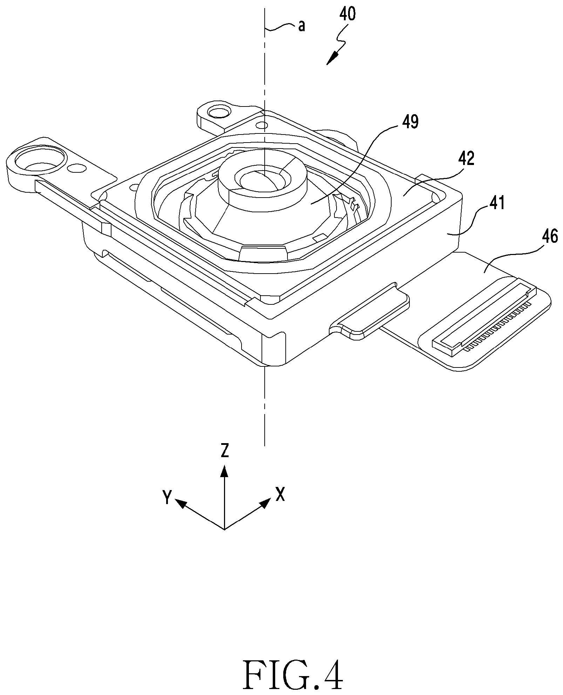

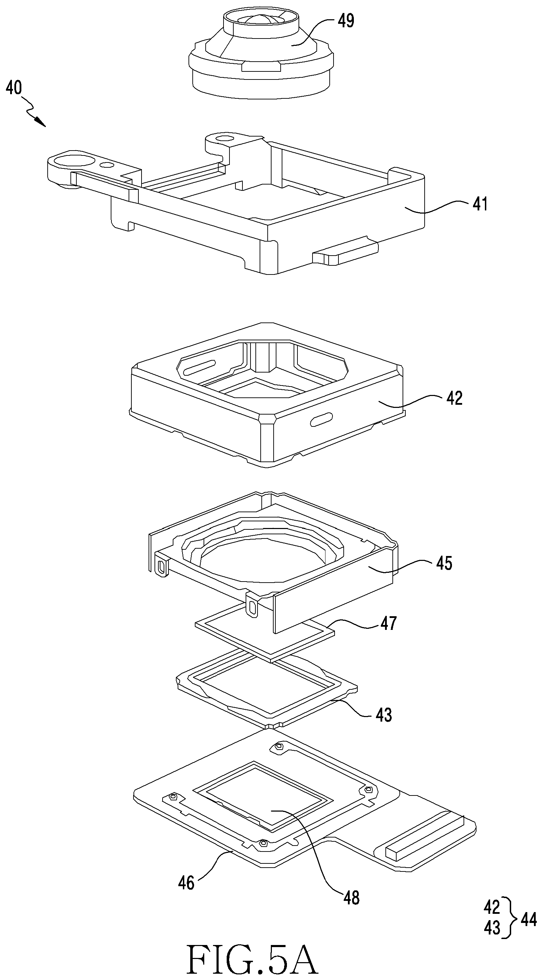

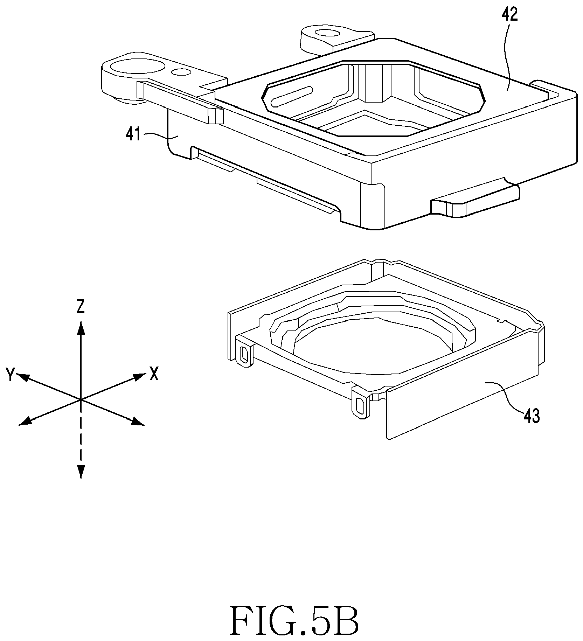

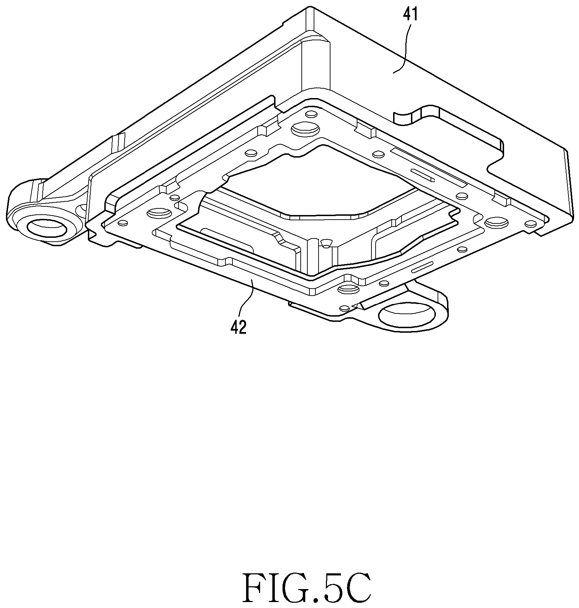

FIG. 4 is an assembled perspective view illustrating a camera lens module according to an embodiment of the disclosure. FIG. 5A is an exploded perspective view illustrating the camera lens module according to an embodiment of the disclosure. FIG. 5B is a perspective view illustrating a state in which a lens housing of the camera lens module is separated from a lens driving unit according to an embodiment of the disclosure. FIG. 5C is a perspective view illustrating a state in which a camera housing of the camera lens module is assembled to an inner housing according to an embodiment of the disclosure.

Referring to FIGS. 4 to 5C, a camera lens module 40 of an embodiment may be arranged on a front surface and/or rear surface of an electronic device (e.g., electronic device shown in FIG. 1) and perform a camera function or be used for video calls.

According to an embodiment, the camera lens module 40 may include a lens module 49, a cover member 41, a lens housing 44, a lens driving unit 45, a filter 47, a printed circuit board 46, and a sensor 48. According to an embodiment, the lens housing 44, the lens driving unit 45, the filter 47, and the sensor 48 may be assembled along an optical axis (a) of a lens arranged in the lens module 49.

According to an embodiment, the lens driving unit 45 (e.g., actuator) may be arranged in an accommodation space of the camera housing 42 and include a structure covering the lens module 49. According to an embodiment, the lens driving unit 45 may present a driving force for automatic focusing (AF) and optical image stabilization (OIS) of the lens module 49. According to an embodiment, the lens driving unit may present a force for the lens module to move along the optical axis (Z-axis), or to move along the X-axis or the Y-axis. For example, the lens driving unit may include at least one voice coil and at least one voice magnet, which are not shown.

According to an embodiment, the sensor 48 may be, for example, an image sensor, and may be arranged on the printed circuit board 46. According to an embodiment, the filter 47 may be an infrared filter, and may be seated in the lens housing 44.

According to an embodiment, a dustproof structure may be formed between a lens barrel of the lens module 49 and the inner housing 43 and prevent dust or foreign substances from entering a space where the sensor 48 is arranged. According to an embodiment, the dustproof structure may be formed as a structurebetween the lens barrel of the lens module 49 and a contact area of the inner housing 43, or may be configured as a structure that collects dust or foreign substances, such as adhesive.

According to an embodiment, the camera lens module 40 may be supported by a thin metal panel arranged on a bottom surface of the printed circuit board 46.

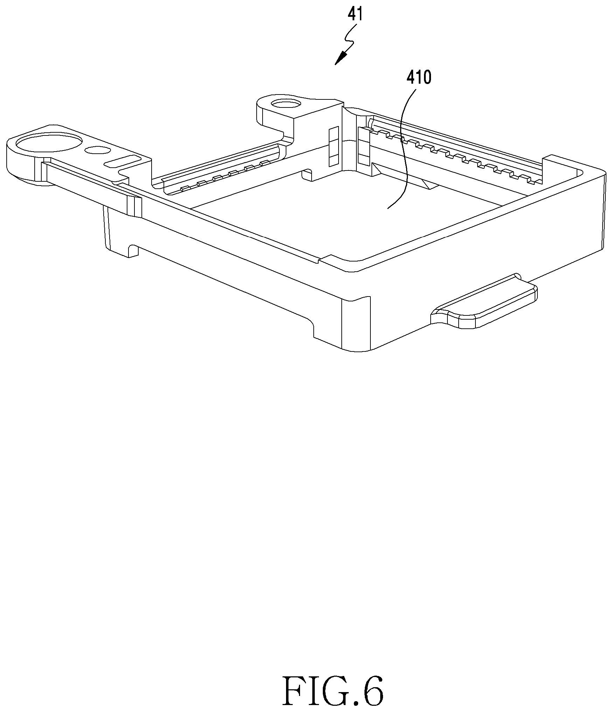

FIG. 6 is a perspective view illustrating a cover member according to an embodiment of the disclosure.

Referring to FIG. 6, according to an embodiment, the cover member 41 is an outer member for packaging and protecting a camera assembly, and may be arranged to surround the lens housing 44. According to an embodiment, the cover member 41 may serve to fix the positions of the components constituting the camera lens module 40 to each other. According to an embodiment, the material of the cover member 41 may be formed of, for example, any one of a metal, aluminum, a stainless steel (SUS) material and a resin or a combination of these materials, and secure the hardness of the camera lens module 40 and prevent deformation/cracking during assembly and/or transportation between processes.

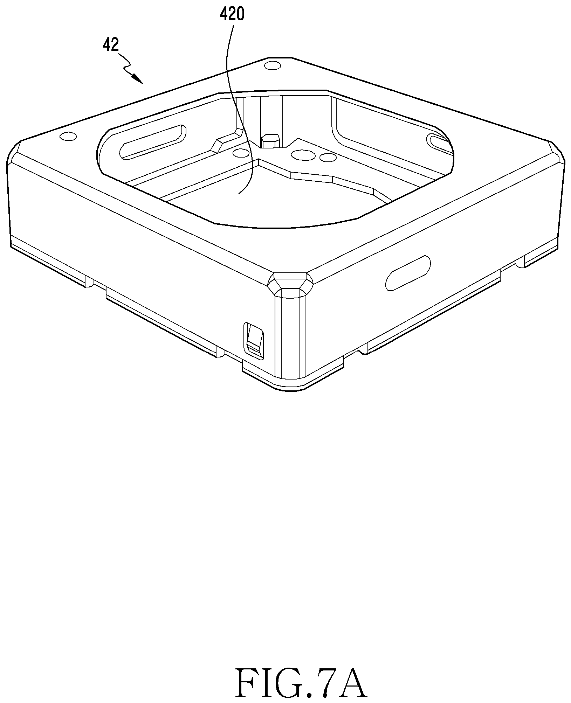

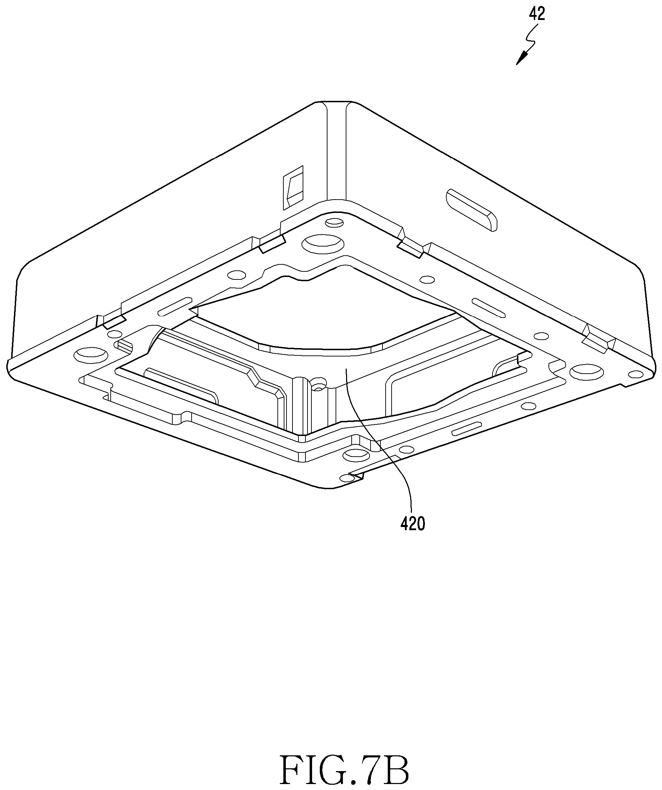

FIG. 7A is a perspective view illustrating a state in which a camera housing is viewed from above according to an embodiment of the disclosure. FIG. 7B is a perspective view illustrating a state in which the camera housing is viewed from below according to an embodiment of the disclosure.

Referring to FIGS. 7A and 7B, according to an embodiment, the lens housing 44 may include the camera housing 42. According to an embodiment, the camera housing 42 may be arranged to surround the lens module 49, and protect the lens module 49 from the outside. According to an embodiment, the lens housing 44 may include the camera housing 42 (e.g., camera outer housing) and the inner housing 43.

According to an embodiment, the camera housing 42 may form the exterior of the camera lens module 40, and include an accommodation space 420 configured to accommodate the lens driving unit 45 and the lens module 49 therein. The camera housing 42 may include a first opening on an upper surface for exposing the lens module 49, and a second opening for allowing light incident on the lens module 49 to pass through.

According to an embodiment, the accommodation space of the front of the camera housing 42 may have a shape corresponding to the lens module 49. According to an embodiment, the camera housing 42 may include the inner space 420 configured to accommodate components other than the lens module 49. The inner space of the camera housing 42 may accommodate components required for operation, such as the lens module 49 or an OIS module, and the inner space 420 may correspond to a location where the respective components are coupled to each other. According to an embodiment, the camera housing 42 may be coupled to the inner housing 43 (IR base), and be connected to the printed circuit board 46 (e.g., FPCB).

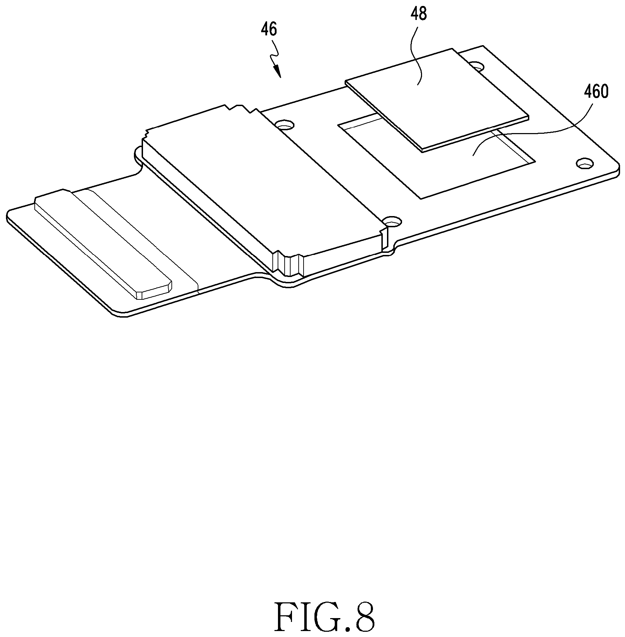

FIG. 8 is a perspective view illustrating a printed circuit board in which another sensor is arranged according to an embodiment of the disclosure.

Referring to FIG. 8, the printed circuit board 46 may include a printed circuit board (PCB) of a rigid or flexible material. Hereinafter, the printed circuit board 46 may be referred to as a flexible printed circuit board 46. According to an embodiment, the flexible printed circuit board (FPCB) 46 may include chip components that serve as capacitors and resistors for driving the image sensor 48, and be arranged on the bottom of the camera housing 42.

According to an embodiment, the flexible printed circuit board 46 may have at least a flexible printed circuit board window 460 formed therein and accommodating a photosensitive element penetrating from an upper surface to an opposite surface. A region corresponding to the flexible printed circuit board window 460 may be set to be larger than the image sensor 48. A panel 465 made of a thin metal may be used to ensure the optical axis of the lens corresponding to the sensor 48, and the panel 465 may be a reinforcing plate for improving the package strength of a photosensitive assembly.

According to an embodiment, the image sensor 48 may collect incident light through the lens module 49 and provide an image signal, and may be formed as a complementary metal oxide semiconductor (CMOS) sensor 48 or a charge coupled device (CCD) sensor 48. According to an embodiment, the image sensor 48 may present a light-receiving surface for capturing an image. According to an embodiment, the image sensor 48 may be mounted on the flexible printed circuit board (FPCB) 46 and be electrically connected to the flexible printed circuit board 46 by a bonding wire. An image of a subject may be collected by the image sensor 48 and be stored as data in a memory of an electronic device, and the stored data may be displayed as an image by a display medium of the electronic device. A gap may be prepared between the image sensor 48 and the flexible printed circuit board window 460 wherein the sensor may be mounted and attached.

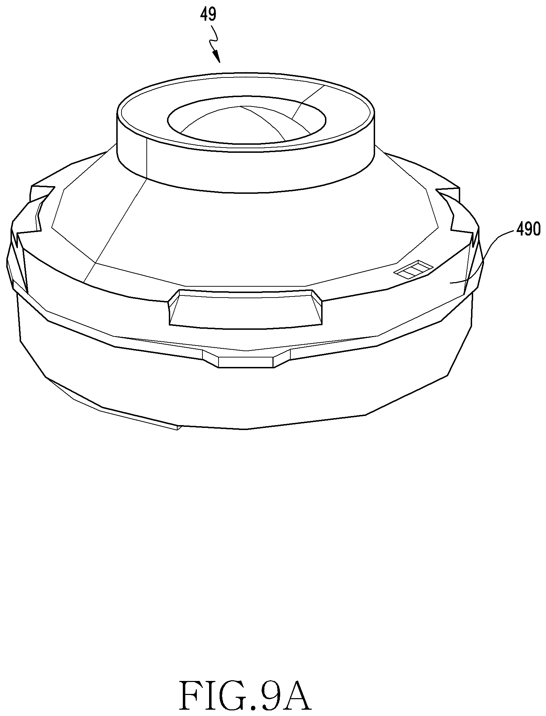

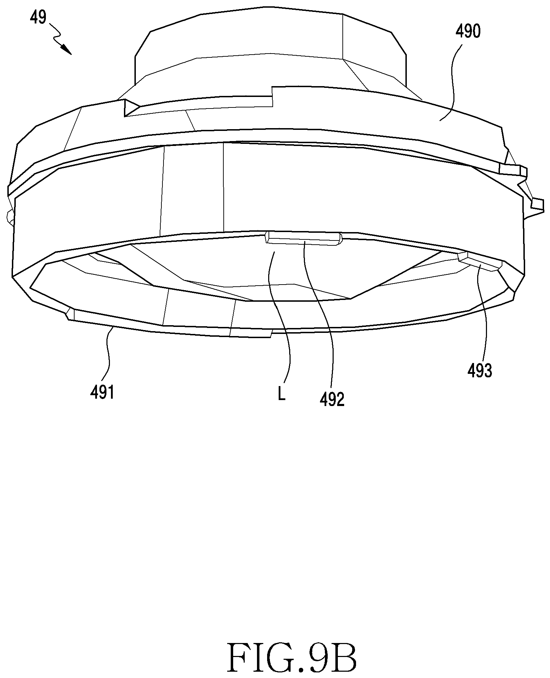

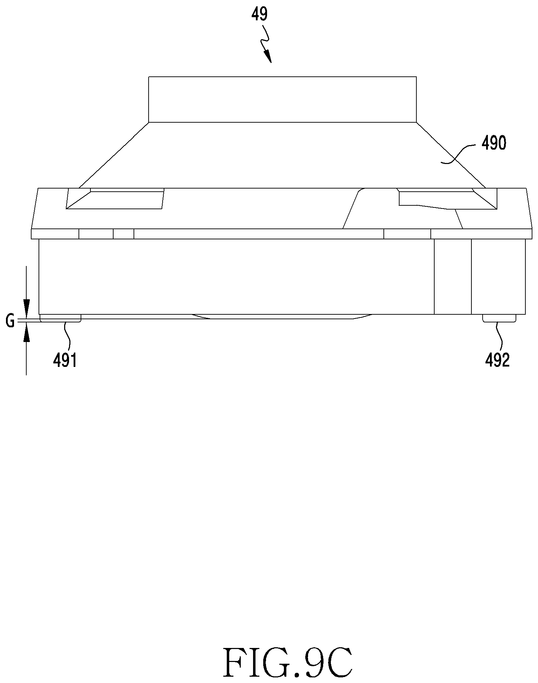

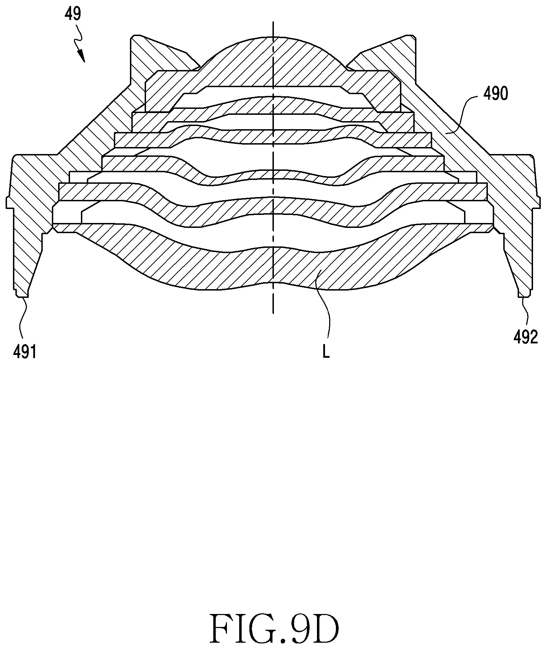

FIG. 9A is a perspective view illustrating a state in which a lens module is viewed from above according to an embodiment of the disclosure. FIG. 9B is a perspective view illustrating a state in which the lens module is viewed from below according to an embodiment of the disclosure. FIG. 9C is a side view of the lens module according to an embodiment of the disclosure. FIG. 9D is a cross-sectional view of the lens module according to an embodiment of the disclosure.

Referring to FIGS. 9A to 9D, according to an embodiment, the lens module 49 may include a plurality of lenses and a lens barrel 490. The lens module 49 may be accommodated in the accommodation space 420 of the camera housing 42, and include at least one transparent material layer. According to an embodiment, these material layers may function as an optical element within an imaging path of the lens, and may therefore be referred to as a lens element as well.

According to an embodiment, examples of material that may be used to form a layer (lens element) in a lens structure of the lens module 49 may include glass, a plastic (e.g., plastic sheet and high-molecular adhesive), a ceramic, a transparent conductive material such as indium tin oxide, other transparent material, or a combination of these materials. This lens structure may obtain information from a camera or the lens element and perform automatic and manual focusing and aperture adjustment.

According to an embodiment, the lens barrel 490 may be seated in the camera housing 42, and the lens element (e.g., convex lens or concave lens) may be arranged on the lens barrel 490.

According to an embodiment, the lens module 49 may be coupled to the lens driving unit 45 through screw fixation and/or adhesive. According to an embodiment, the lens module 49 may move integrally with the lens driving unit 45. The lens module 49 may move along an optical axis direction within the camera housing 42 through the lens driving unit 45, and this will be described later to automatically focus an optical system.

According to an embodiment, the shape of the lens barrel 490 may be formed in a cylindrical shape and correspond to the shape of the plurality of lenses and the camera housing 42, but may be designed in various ways according to designer's design.

According to an embodiment, at least one support stand 491 to 493 may be formed at a lower end of the lens barrel 490. According to an embodiment, the support stand may include a first support stand 491, a second support stand 492, and a third support stand 493 formed at the lower end of the lens barrel 490. According to an embodiment, the first support stand to the third support stand 493 may be formed integrally with the lens barrel 490, and protrude along the lower end of the lens barrel 490.

According to an embodiment, the first support stand 491 may be formed at one side of the lower end of the lens barrel 490, and the second support stand 492 and third support stand 493 may be formed at the other side of the lower end of the lens barrel 490. According to an embodiment, the first support stand 491 and the second support stand 492 and third support stand 493 may be opposite to each other. According to an embodiment, the width of the first support stand 491 may roughly correspond to the width of the sum of the second support stand 492 and third support stand 493.

Although not shown in the drawing, a controller of the camera lens module 40 may be electrically connected to the lens driving unit 45. According to an embodiment, the controller may individually control the direction, intensity, and amplitude of a current supplied to the lens driving unit 45. According to an embodiment, the controller may control an auto focus (AF) function and an optical image stabilization (OIS) function of the lens driving unit 45 and perform the following.

The auto focus function may control to move a position of the lens module 49 along the Z-axis and adjust a focal length of a lens. The optical image stabilization function may move the position of the lens module 49 along the X-axis and/or the Y-axis and again align the optical path to the center of the image sensor. The movement of the lens module 49 induced by the lens driving unit 45 during the auto focus function and the optical image stabilization (OIS) function defines a movement region of the lens barrel 490 and a contact region of the support stand on a surface of the inner housing 43, and this will be described later.

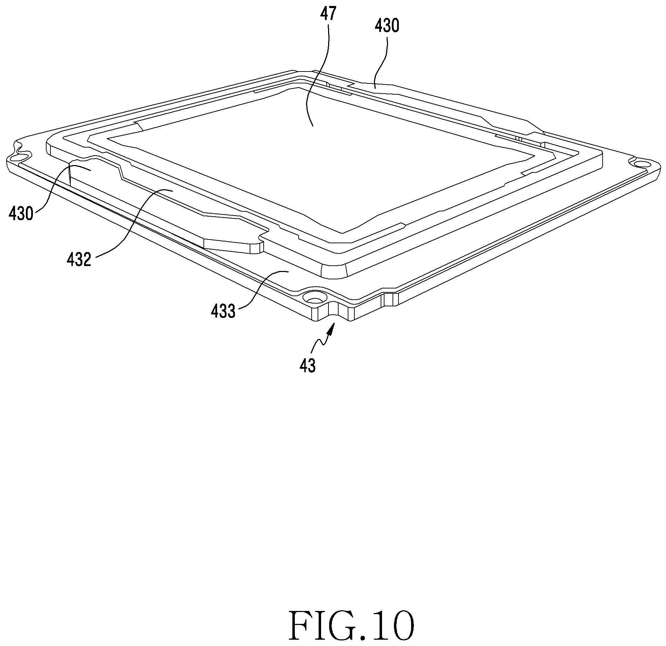

FIG. 10 is a perspective view illustrating an inner housing in which a filter is seated according to an embodiment of the disclosure.

Referring to FIG. 10, according to an embodiment, the infrared filter 47 may be arranged at a lower portion of the camera housing 42 and be configured to block infrared rays and allow visible light received from a lens to pass through to an image sensor. According to an embodiment, the infrared filter 47 may be a glass filter or a film filter, and may be rectangular or square, but is not limited to such a shape. According to an embodiment, the infrared filter 47 may be attached to an inner housing and be arranged below the lens module 49, and may be arranged to face the image sensor. For example, the infrared filter 47 may include an effective filtering area, a black masking area, and an attaching area.

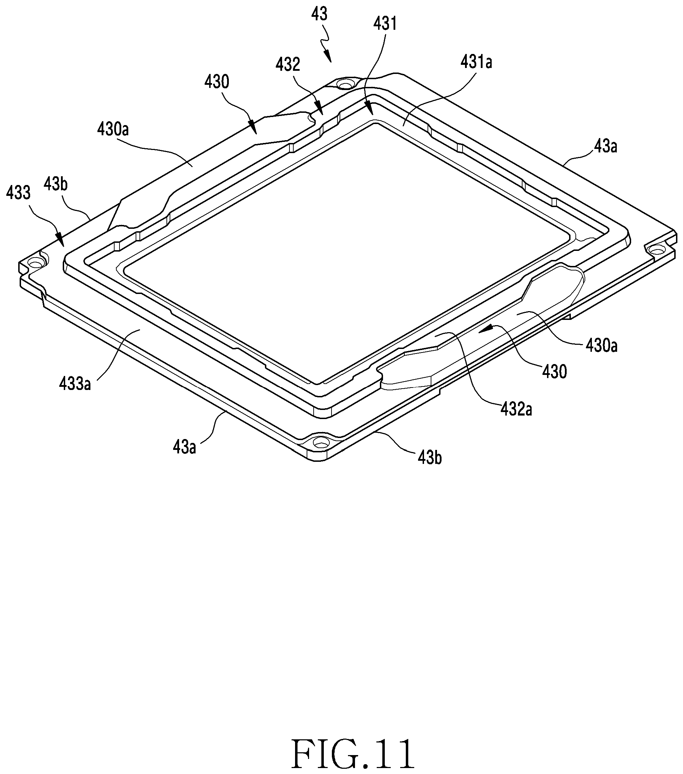

FIG. 11 is a perspective view illustrating an inner housing according to an embodiment of the disclosure.

Referring to FIG. 11, according to an embodiment, the inner housing 43 may be arranged on the printed circuit board 46 and within the accommodation space 420 of the camera housing 42. According to an embodiment, the inner housing 43 may be arranged between the lens driving unit 45 and the printed circuit board 46, and may function as a base for mounting the infrared filter 47. According to an embodiment, an opening may be formed in a portion (e.g., first portion) of the inner housing 43 where the infrared filter 47 is arranged, and introduce light passing through the infrared filter 47 into the image sensor.

According to an embodiment, the inner housing 43 is of a roughly rectangular shape when viewed from above, and may include, along a periphery of the filter 47, a pair of short sides 43a and a pair of long sides 43b arranged between the pair of short sides 43a. According to an embodiment, an upper surface of the inner housing 43 may include a first portion 431, a second portion 432, and a third portion 433 as portions that face and contact the first support stand 491 to third support stand 493 of the lens barrel of the lens module 49.

According to an embodiment, the first portion 431 is a seating portion for mounting and locating the infrared filter 47, and may have a first surface 431a formed thereon. The first portion 431 may include the first surface on which a lower surface of the infrared filter 47 is disposed. According to an embodiment, the first portion 431 may define an opening through which light passing through the infrared filter 47 may enter the image sensor. The first portion 431 may have a larger area than the infrared filter 47 and secure an assembly tolerance between the inner housing 43 and the infrared filter 47 when the inner housing 43 and the infrared filter 47 are mounted.

According to an embodiment, the second portion 432 may be formed around the first portion 431, and may have a second surface 432a higher than a surface of the infrared filter 47 and form an attaching area for attaching an infrared filter 47 protection member. According to an embodiment, the infrared filter protection member may cover and protect the infrared filter 47 during a process, before assembling with other components of the camera lens module 40.

According to an embodiment, the third portion 433 may be arranged to surround the second portion 432, and may have a third surface 433a lower than the second portion 432 and form the printed circuit board 46 on a lower surface and form a base for coupling the camera housing 42 to the inner housing 43 on an upper surface.

In some cases, the camera lens module 40 may move inside the camera housing 42 along the X axis and Y axis (e.g., auto focus function) and the Z axis (e.g., optical image stabilization function (OIS) function), and the lens module 49 may move and come into contact with the upper surface of the inner housing 43 since there are a manufacturing tolerance and assembly tolerance of camera components such as the lens and the lens barrel.

In this case, a portion of the lens barrel of the lens module 49 may come into contact with the inner housing 43 and move relatively, and friction between the lens barrel 490 and the inner housing 43 may provide dust and affect an image quality. The disclosure discloses a dustproof structure of preventing this phenomenon, reducing friction between the lens barrel 490 and the inner housing 43, and removing dust entering the optical path between the lens and the image sensor, as follows.

According to an embodiment, the inner housing 43 may have at least one stepped portion 430 formed therein. According to an embodiment, the stepped portion 430 may be formed on an X axis -Y axis plane between the second portion 432 and the third portion 433. According to an embodiment, an upper surface of the stepped portion 430 may be formed at a lower position than the second portion 432, and be formed at a higher position than the third portion 433. Depending on the position where the stepped portion is formed, a contact portion between the stepped portion 430 and the support stand may be the stepped portion 430.

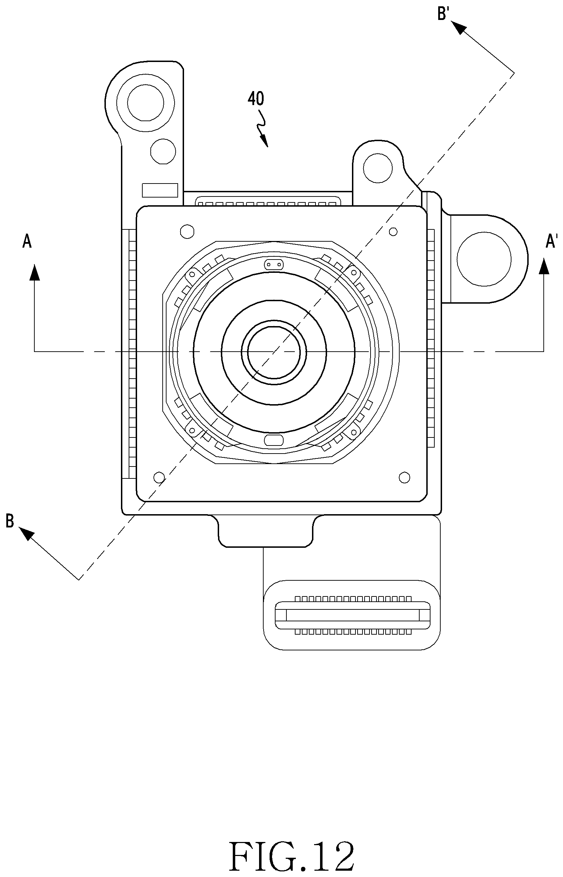

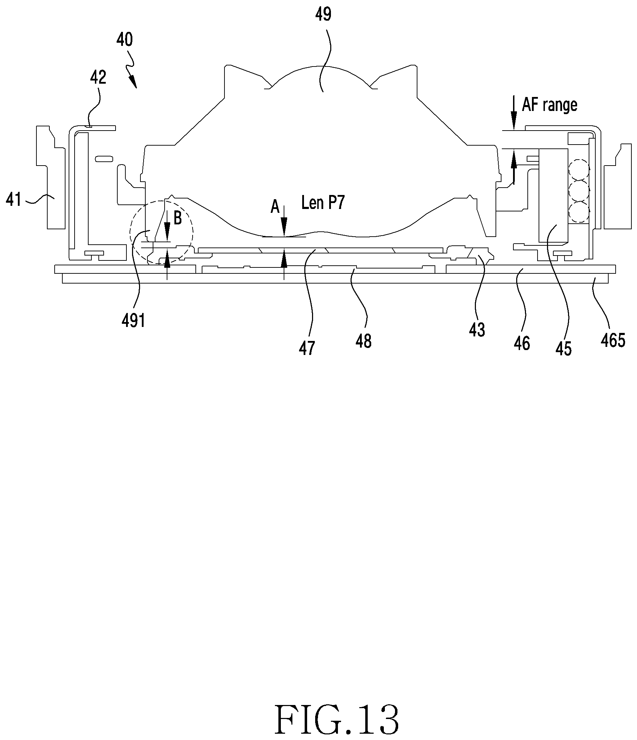

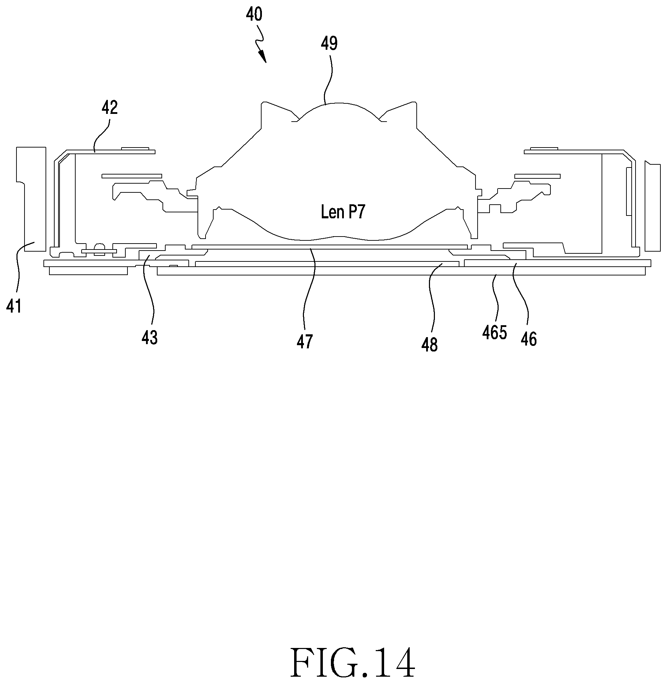

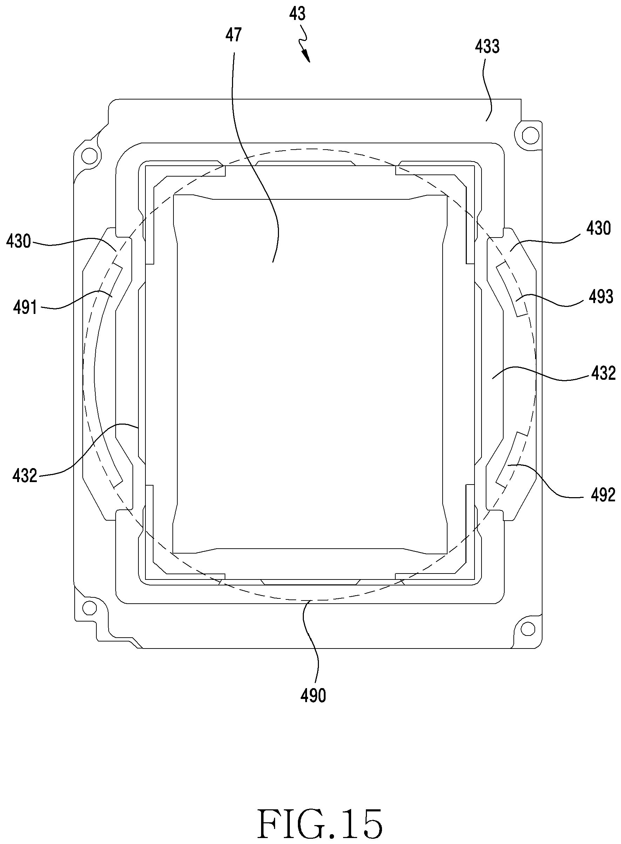

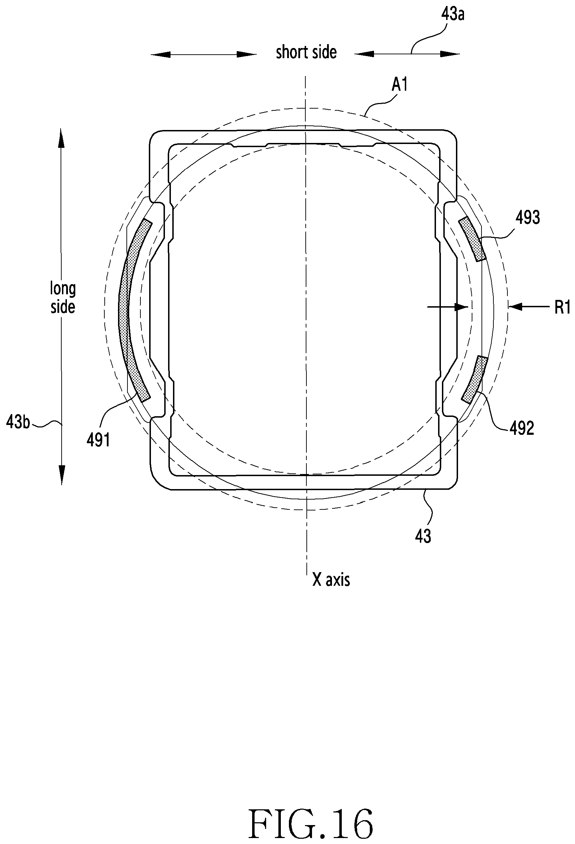

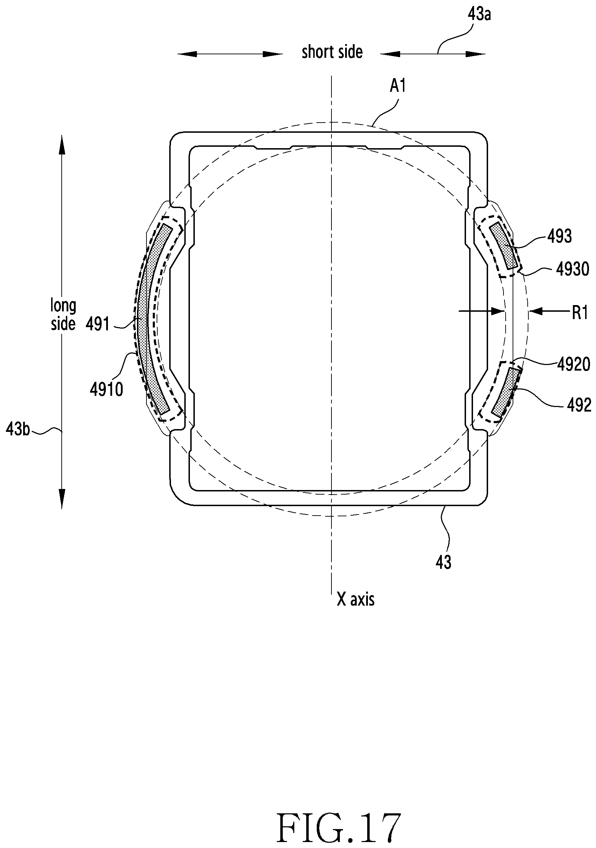

FIG. 12 is a plan view illustrating a camera lens module according to an embodiment of the disclosure. FIG. 13 is a cross-sectional view taken along line A-A' of FIG. 12. FIG. 14 is a cross-sectional view taken along line B-B' of FIG 12. FIG. 15 is a plan view illustrating a state where a support stand is located on a surface of an inner housing in which a filter is arranged according to an embodiment of the disclosure. FIG. 16 is a plan view illustrating a movement region of a lens barrel on the surface of the inner housing according to an embodiment of the disclosure. FIG. 17 is a plan view illustrating a contact region of the support stand on the surface of the inner housing according to an embodiment of the disclosure.

Referring to FIGS. 11 to 17, according to an embodiment, a contact area between the lens barrel 490 and the inner housing 43 may be determined by a maximum movement range of the first support stand 491 to third support stand 493 of the lens barrel 490 when the camera lens module 40 operates an OIS function. According to an embodiment, the first support stand 491 to third support stand 493 may move in any direction along the X-axis and the Y-axis.

According to an embodiment, a movement region of the first support stand 491 may correspond to a contact region of the first support stand 491 on the inner housing 43 and a maximum movement range being based on an OIS function, in an "idle state" of the camera lens module 40 (the camera lens module 40 is not moving and no force is exerted on the inner housing 43). According to an embodiment, a movement region of the second support stand 492 may correspond to a contact region of the second support stand 492 on the inner housing 43 adding a maximum movement range being based on the OIS function, in a "stop state" of the camera lens module 40. According to an embodiment, a movement range of the third support stand 493 may correspond to a maximum movement range being based on the OIS function to a contact region of the third support stand 493 on the inner housing 43, in a "resting state" of the camera lens module 40.

The contact region may include a contact region 4910 of the first support stand 491, a contact region 4920 of the second support stand 492, and a contact region 4930 of the third support stand 493.

According to an embodiment, the stepped portion 430 may cover the contact area of the support stand on the surface of the inner housing 43 wherein the first support stand 491 to third support stand 493 may contact the inner housing 43 within a region lower than a surface of the second portion 432, and prevent particles (dust) caused by friction between the first support stand 491 to third support stand 493 and the inner housing 43 from moving to an infrared filter region. According to an embodiment, the stepped portion 430 may be arranged on the outside of the second portion 432 and form a surface lower than the second surface 432a of the second portion 432 of the inner housing 43, and prevent dust generated by friction between the lens barrel 490 and the stepped portion 430 from entering an active region of the infrared filter 47. According to an embodiment, an upper surface of the stepped portion 430 may be formed lower than the second portion 432, and thus the second portion 432 may serve as a penetration barrier that prevents foreign substance penetration.

According to an embodiment, the stepped portion 430 may be arranged in the inner housing 43 and limit a movement range of the lens barrel 490 along the Z-axis (AF function), and may support the first support stand 491 to third support stand 493 of the lens barrel 490 and prevent the lens barrel 490 from moving excessively toward a lower portion of the inner housing 43.

To this end, in an assembled state, a gap (B) between the stepped portion 430 and the first support stand 491 to third support stand 493 may be smaller than a distance (A) between the lens and the infrared filter 47. According to an embodiment, the stepped portion 430 may stop the downward movement of the lens barrel 490, and prevent the lens from coming into contact with the infrared filter 47 (B < A).

According to an embodiment, the stepped portion 430 may have a shape being based on the shape of the support stands of the lens barrel 490, and may secure the width of an area defined by the second portion 432 for attaching an infrared protection tape while limiting a covering area of the stepped portion 430 and secure an area for coupling the inner housing 43 to the camera housing 42. According to an embodiment, the stepped portion 430 may be formed at a place where the stepped portion 430 may come into contact with the support stands 491 to 493, and may have a shape that extends along the support stands 491 to 493. For example, the shape of the extended stepped portion 430 may be a shape approximately having a curvature.

In an assembly process, the lens may be assembled to the lens barrel 490. To support this process and prevent the lens from tilting toward the barrel after assembly, the lens barrel 490 may include at least three support stands 491 to 493 that are formed integrally with the lens module 49 and protruded along a lower outer circumference surface of the lens barrel 490. The flatness of the lens barrel 490 may be corrected with the lens barrel 490 put in a jig, based on the first support stand 491 to third support stand 493. The first support stand 491 to third support stand 493 may be arranged lower than a bottom surface of the lowest lens (a bottom surface of the support stand is lower by a distance (G) than a bottom surface of a P7 lens) and prevent the P7 lens from being scratched with contacting a jig surface.

According to an embodiment, the lens barrel 490 has the first support stand 491 to third support stand 493 and stands stably on a surface of the jig (not shown). According to an embodiment, the shape of each of the first support stand 491 to third support stand 493 may be based on the shape of the lens barrel 490, the thickness of each of the first support stand 491 to third support stand 493 may be the same as the thickness of the lens barrel 490, and the width of each of the first support stand 491 to third support stand 493 may be formed larger than a predefined width, and improve strength, prevent a crack, and promote the easiness of an injection process.

According to an embodiment, the first support stand 491 supports the assembly process, and has the largest width wherein a balance area is maximized. That is, the width of the first support stand 491 may correspond to the width of the second support stand 492 and the width of the third support stand 493.

According to an embodiment, the first support stand 491 may be arranged corresponding to one long side of the inner housing 43, and the second support stand 492 and third support stand 493 may be arranged corresponding to the other long side of the inner housing 43, and maximize a distance from the infrared filter 47 and prevent impact on an active region of the infrared filter 47.

According to an embodiment, since the stepped portion 430 must cover a contact area of the first support stand 491 to third support stand 493, the stepped portion 430 facing each other may be arranged at the long side of the inner housing 43, and position the contact area of the support stand outside the second portion 492 and maximize a distance between the contact surface and the infrared filter 47.

According to an embodiment, the gap (B) between the support stands 491 to 493 and the stepped portion 430 may be smaller than the distance (A) between the lens and the filter 47.

In FIG. 16, reference symbol A1 may indicate a movement region of the lens barrel, and R1 may indicate an OIS moving range.

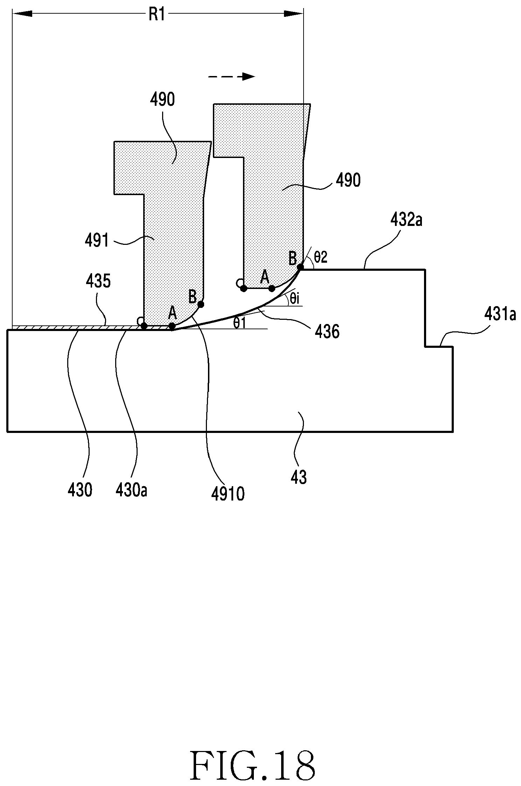

FIG. 18 is a cross-sectional view illustrating a state in which an inclined surface of a stepped portion of an inner housing is a curved surface and a state in which an inclined surface of a support stand is a curved surface according to an embodiment of the disclosure, and is an example diagram showing each movement state of a support stand.

Referring to FIG. 18, according to an embodiment, the stepped portion 430 may include an inclined surface 436, which is adjacent to the second portion 432, whose angle increases as it goes toward the second portion 432. According to an embodiment, the inclined surface 436 restricts the movement of the lens barrel 490 toward the infrared filter 47, but may prevent a sudden collision between the support stands of the inner housing 43 and reinforce a base structure of the infrared filter.

According to an embodiment, among the first support stand 491 to third support stand 493, the first support stand 491 will be described as an example. The first support stand 491 may have an inclined surface 4910 corresponding to the inclined surface 436 of the stepped portion 430. While a contact area of a partial stand on the infrared filter 47 is reduced, a predetermined distance between the lens barrel 490 and the second portion 432 of the inner housing 43 may be maintained and the strength of the support stand may be secured. According to an embodiment, in an assembled state, each of the first support stand 491 to the third support stand 493 may include a bottom surface that includes a flat region AC adjacent to the outside of the lens barrel 490 and an inclined region AB adjacent to the flat region. In the flat region AC, the lens barrel 490 may be supported during an assembly process with the lens. In the curved region AB, the lens barrel 490 may be supported when the lens barrel 490 contacts and slides on the upper surface of the stepped portion 430. According to an embodiment, the inclined surface 436 of the support stand may be a curved surface, and the structure of the inclined surface 436 may reduce friction and dust provision.

According to an embodiment, the inclined surface 436 of the stepped portion 430 may be a curved surface whose curve angle increases as it goes from a fourth surface 430a of the stepped portion 430 to the second portion 432, and which contacts a curved surface of the support stand of the lens barrel 490.

According to an embodiment, the stepped portion 430 may include a curved surface having a curve profile whose curve angle increases as it goes toward the second portion 432. The curve angle *θ*1 may be at the lowest position of the first support stand 491 of the lens barrel 490 that contacts the stepped portion 430 of the inner housing 43. The curve angle *θ*2 may be at the highest position of the first support stand 491 of the barrel that contacts the stepped portion 430 of the inner housing 43, and the angle *θ*i may be at any position of the curve between the lowest position and the highest position *θ*1 < *θ*i < *θ*2.

According to an embodiment, since the lens barrel 490 may be free to move along the X-axis and the Y-axis, since the first support stand 491 of the lens barrel 490 may move to and contact a curved step of the stepped portion 430, since a contact surface between the AB region of the first support stand 491 and the stepped portion 430 always changes from A to B, friction between the first support stand 491 and the stepped portion 430 may be reduced and thus providable dust may be reduced.

According to an embodiment, an adhesive layer 435 may be arranged on the stepped portion 430 and capture dust that may be provided by friction between the first support stand 491 to third support stand 493 and the stepped portion 430 when the first support stand 491 to third support stand 493 contact and slide on the stepped portion 430.

According to an embodiment, the shape of the stepped portion 430 formed between the second portion 432 and the third portion 433 of the inner housing 43 may vary.

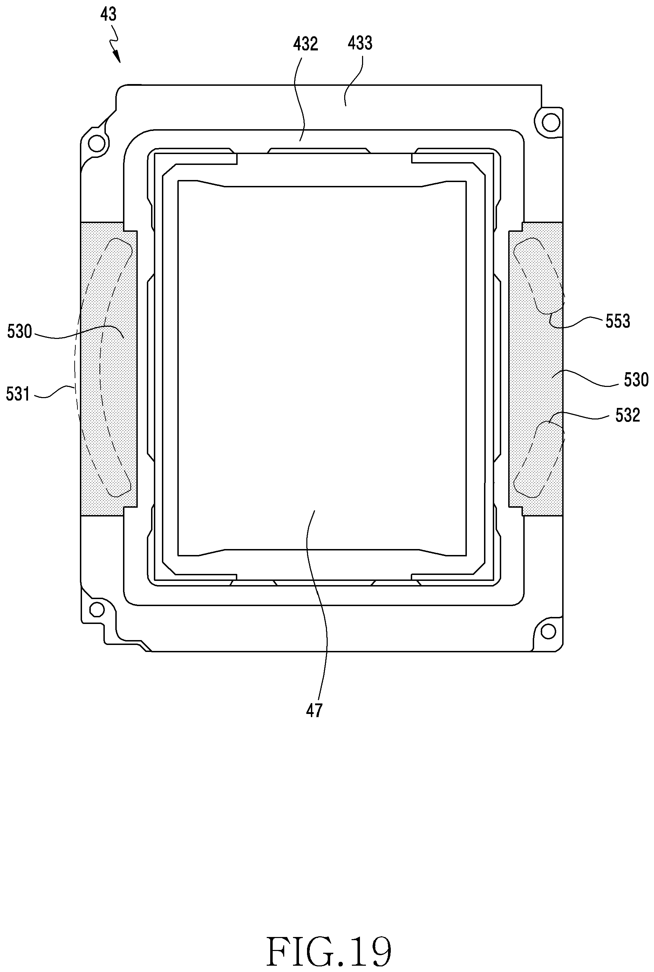

FIGS. 19 to 22 are plan views each illustrating the shape of a stepped portion according to various embodiments of the disclosure.

Referring to FIG. 19, according to an embodiment, in top view of the inner housing 43, the shape of the stepped portion 530 may be a shape extending along a long side of the third portion 432 of a rectangular shape that is the shape of a circumferential portion of the inner housing 43. For example, the stepped portion 530 may be an approximately linear shape. However, according to an embodiment, the stepped portion 530 may reduce the area of the second portion 432 to which the infrared center protection tape is attached. Part of a contact region 531' of the first support stand or contact regions 532 and 533 of the second support stand and third support stand may have a partial region not coming into contact with the stepped portion 530.

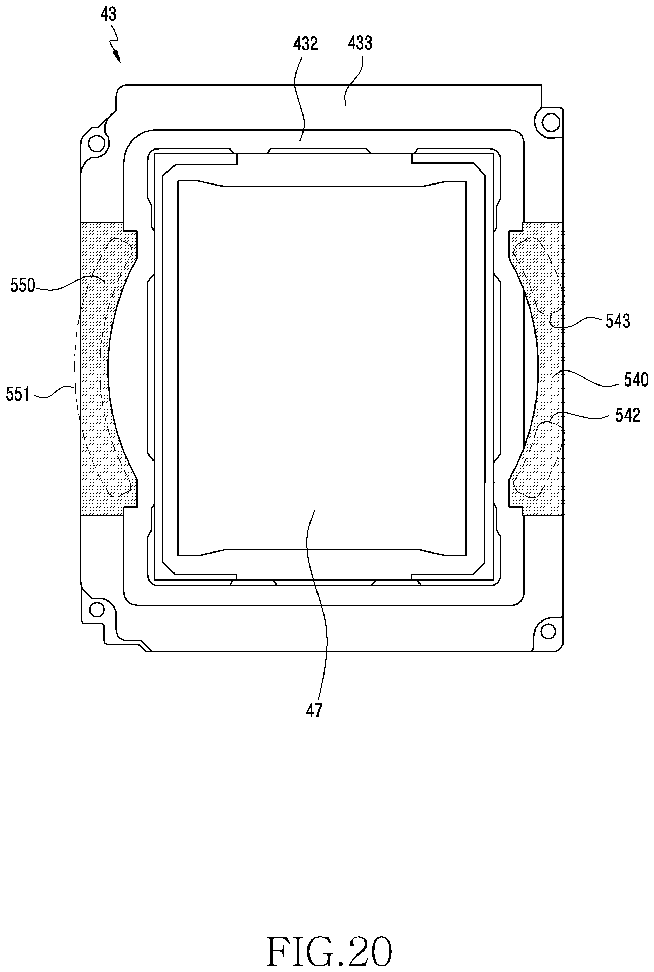

Referring to FIG. 20, according to an embodiment, in top view of the inner housing 43, the shape of the stepped portion 450 may be formed as a curved shape on inner sides of contact area 541 to 543 of the first support stand to third support stand adjacent to the second portion 432, and increase the area of the second portion attaching the infrared sensor protection tape. Part of the contact region 541' of the first support stand or the contact regions 542 and 543 of the second support stand and third support stand may have a partial region not coming into contact with the stepped portion 540.

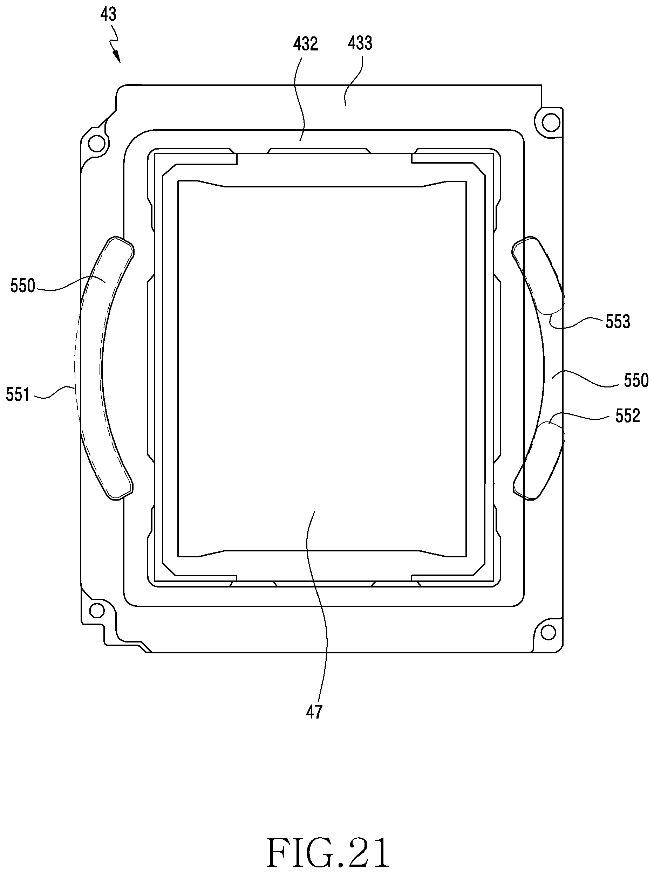

Referring to FIG. 21, in top view of the inner housing 43, the shape of the stepped portion 550 is the shape of contact areas 551 to 553 of the first support stand to third support stand, and may have the smallest area. Part of the contact region 551' of the first support stand or the contact regions 552 and 553 of the second support stand and third support stand may have a partial region not coming into contact with the stepped portion 550.

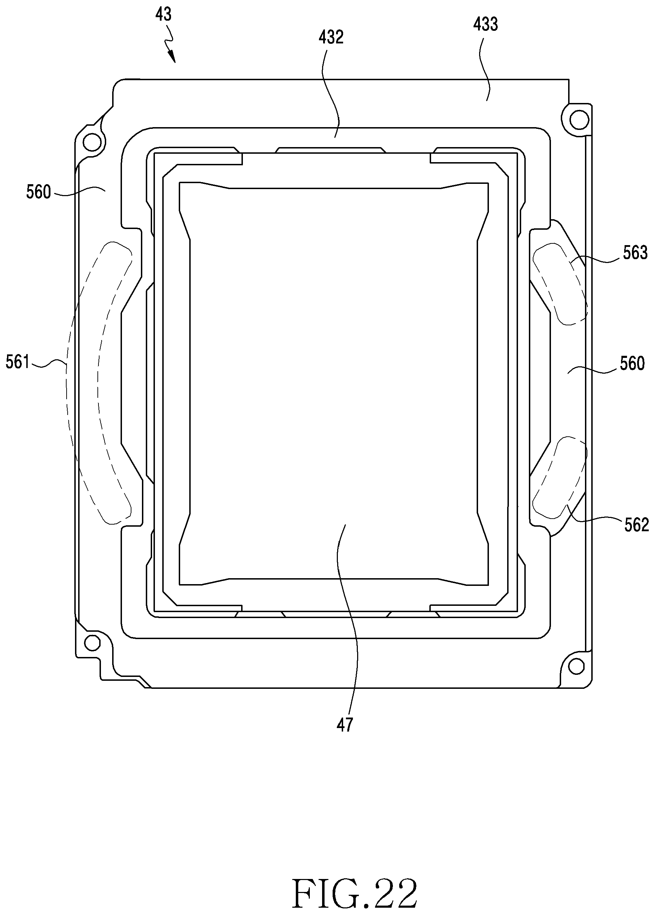

Referring to FIG. 22, in top view of the inner housing 43, the third portion 433 may be formed in a structure having the same high level as the stepped portion 560. For example, the third portion 433 may be a portion that functions entirely as the stepped portion 560. Part of a contact region 561' of the first support stand or contact regions 562 and 563 of the second support stand and third support stand may have a partial region not coming into contact with the stepped portion 560.

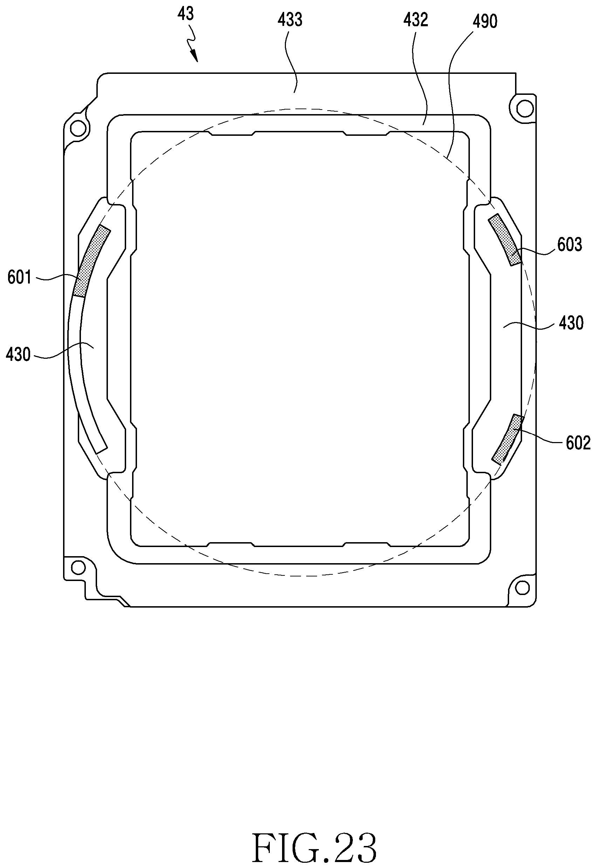

FIGS. 23 to 25 are plan views each illustrating the arrangement structure of a support stand according to various embodiments of the disclosure.

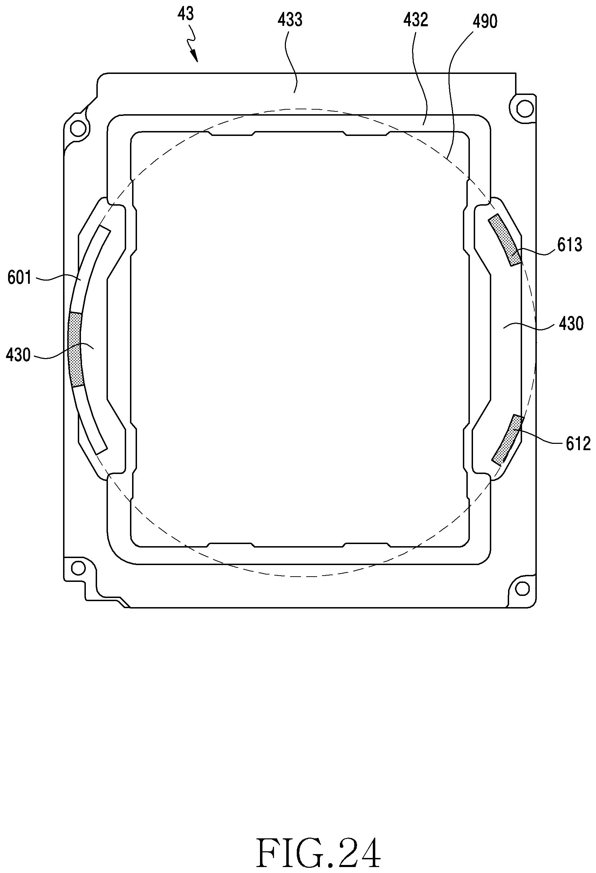

Referring to FIGS. 23 and 24, the number of support stands formed according to an embodiment may be configured as three. However, when this support stand structure is formed, a balance area in an assembly process of the lens barrel 490 may be reduced.

Referring to FIG. 23, the support stand of an embodiment may have one first support stand 601 formed at one side of the lens barrel 490, and two second support stand 602 and third support stand 603 formed at the other side. According to an embodiment, the first support stand 601 may face the third support stand 603, based on the horizontal direction, and face the third support stand 602, based on the optical axis.

Referring to FIG. 24, a support stand of an embodiment may have one first support stand 611 formed at one side of the lens barrel 490, and two second support stand 612 and third support stand 613 formed at the other side. According to an embodiment, the first support stand 612 may be a shape more extending in an outer circumference direction than the second support stand 612 and third support stand 613, and may face a middle portion between the second support stand 612 and third support stand 613.

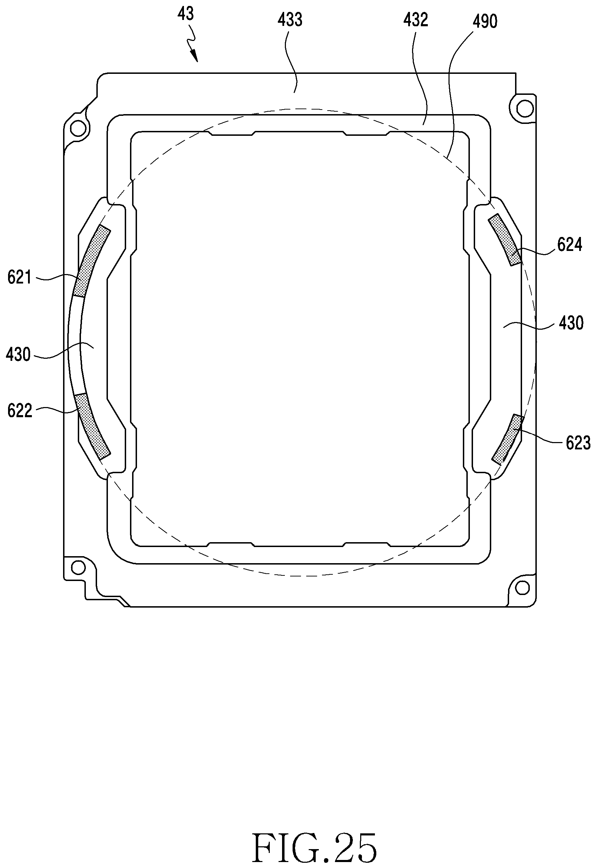

Referring to FIG. 25, the number of support stands of an embodiment may be configured as four support stands 621 to 624.

Referring to FIG. 25, the support stand of an embodiment may have two first support stand 621 and second support stand 622 formed at one side of the lens barrel 490, and have two third support stand 623 and fourth support stand 624 formed at the other side. According to an embodiment, the first support stand 611 may face the fourth support stand 624, based on the horizontal direction, and the second support stand 622 may face the third support stand 623, based on the horizontal direction.

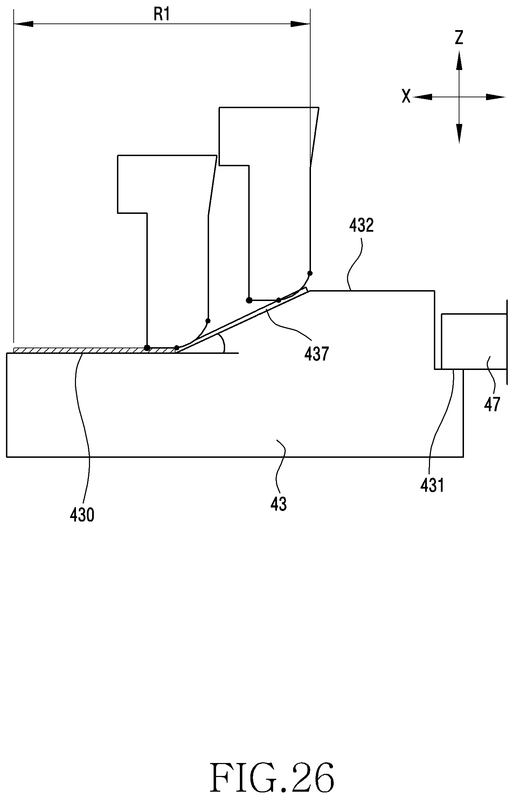

FIG. 26 is a cross-sectional view illustrating a state in which an inclined surface of a stepped portion of an inner housing is a flat surface and a state in which an end portion of a support stand is a curved surface according to an embodiment of the disclosure.

Referring to FIG. 26, according to an embodiment, a cross-section of a first inclined surface 437 formed between the fourth surface and second surface of the stepped portion 430 of the inner housing 43 may be a flat surface. According to an embodiment, the cross-section of the first inclined surface 437 of the stepped portion 430 may present a straight line having a predefined curved angle (*θ*i).

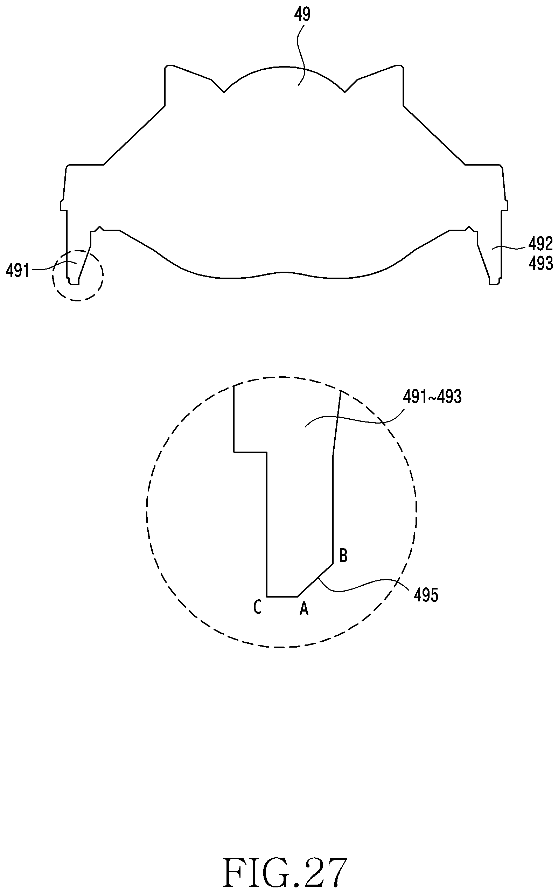

FIG. 27 is a cross-sectional view illustrating a state in which an inclined surface of a support stand is a flat surface according to an embodiment of the disclosure.

Referring to FIG. 27, according to an embodiment, end portions of the first support stand 491 to third support stand 493 that contact the stepped portion 430 may be inclined surfaces 495. According to an embodiment, the inclined surface 495 may be a flat surface, and may have a cross-sectionof a straight line. According to an embodiment, a bottom surface of each of the first support stand 491 to third support stand 493 may be comprised of the flat region AC and the inclined region AB. According to an embodiment, the inclined region AB may be a shape extending from the flat region AC.

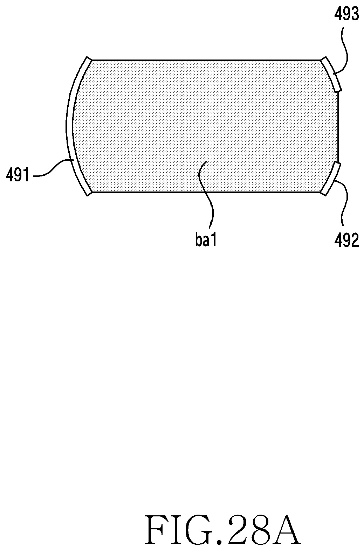

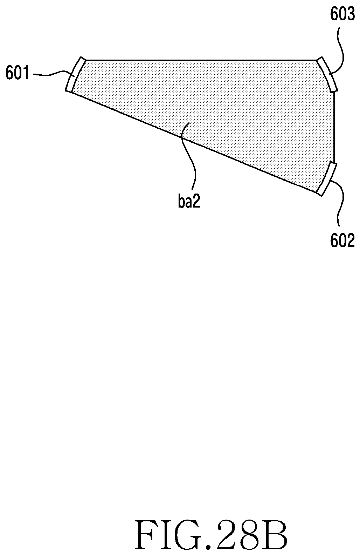

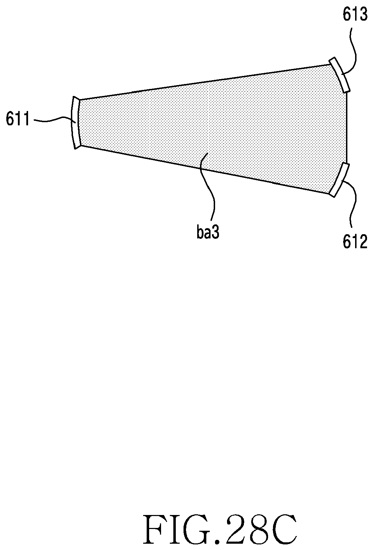

FIGS. 28A to 28C are exemplary diagrams each illustrating a balance area being based on the structure of various support stands according to an embodiment of the disclosure.

Referring to FIGS. 28A to 28C, according to an embodiment, a balance area ba1 of the support stands 491, 492 and 493 illustrated in FIGS. 15 to 17 may present a maximum balance area, compared to a balance area ba2 of the support stands 601, 602 and 603 illustrated in FIG. 23 or a balance area ba1 of the support stands 611, 612 and 613 illustrated in FIG. 24.

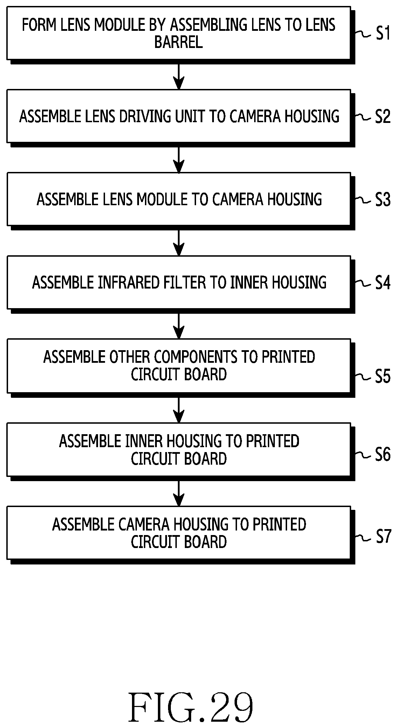

FIG. 29 is a flowchart sequentially illustrating an assembly process of a camera lens module according to an embodiment of the disclosure.

The assembly process of the camera lens module 40 will be described with reference to FIG. 29.

According to an embodiment, a lens module may be formed by attaching a lens to the lens barrel 490 (S1). Next, the lens driving unit 45 may be assembled to the camera housing 42 (S2). Next, the lens module may be assembled to the camera housing 42 (S3). Next, the infrared filter 47 may be assembled to the inner housing 43 (S4).

Next, other components may be assembled to the printed circuit board 46 (S5). Next, the inner housing 43 may be assembled to the printed circuit board 46 (S6). Finally, the assembly process of the camera lens module 40 may be completed by assembling the camera housing 42 to the printed circuit board 46 (S7).

According to an embodiment, the camera lens module 40 of the disclosure may be applied to all electronic devices of a camera structure, such as a computer, a webcam, a photographer, a security camera, etc.

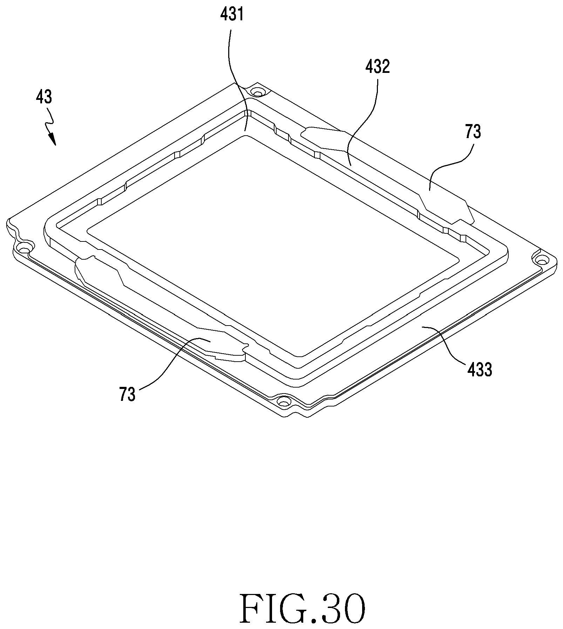

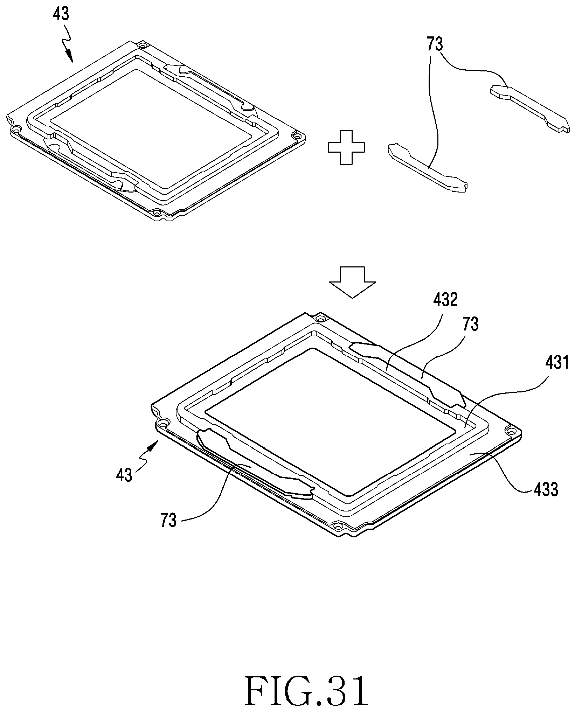

Referring to FIGS. 30 and 31, according to an embodiment, the same structure of an inner housing 43 as that of the inner housing 43 illustrated in FIG. 11 will be omitted to avoid repeated description and only a different structure will be described.

According to an embodiment, the material of the inner housing 43 and the material of a stepped portion 73 may be formed as different materials. According to an embodiment, the stepped portion 73 may be manufactured separately, and include first stepped portion and second stepped portion 73 respectively coupled to long sides of the inner housing 43. According to an embodiment, the stepped portion 73 may include an elastic material. For example, the elastic material may include one of a rubber or a silicone material or a combination of the materials.

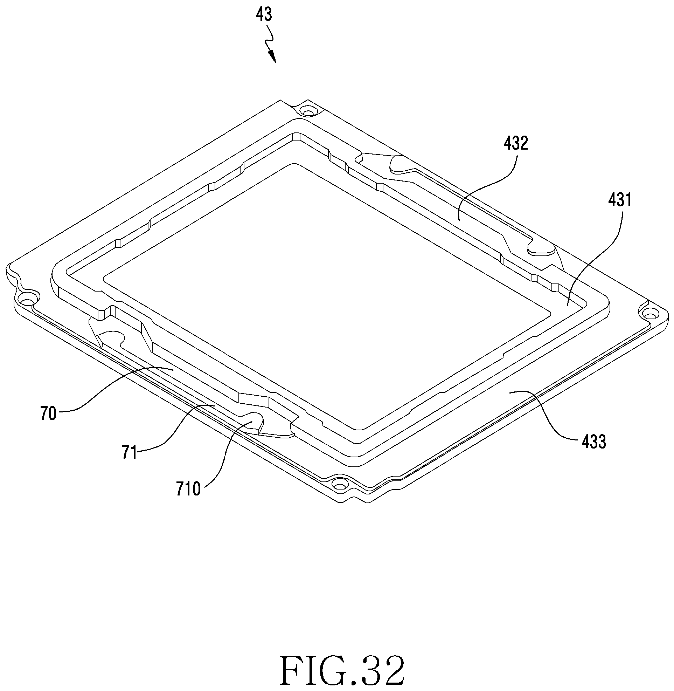

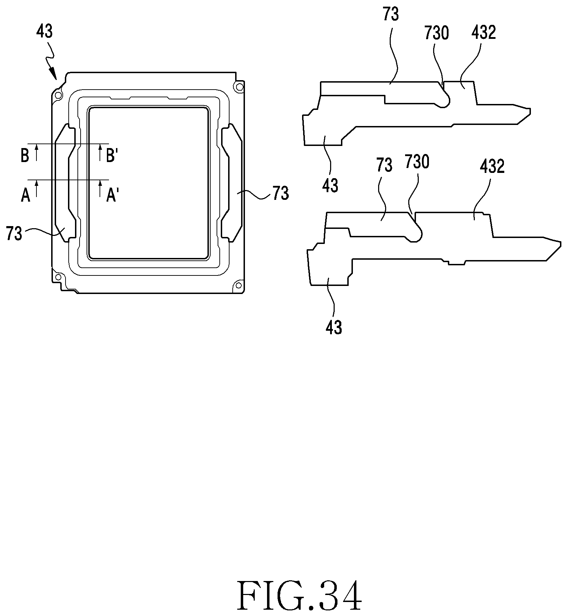

Referring to FIGS. 32 to 35, according to an embodiment, the inner housing 43 may include a first seated groove 70 into which at least a portion of the stepped portion 73 is inserted, and a first protrusion 71. According to an embodiment, the first seated groove 70 may extend approximately in a longitudinal direction in which the stepped portion 73 extends.

According to an embodiment, a second seated groove 701 recessed along an edge of a bottom portion of the first seated groove 70 may additionally be formed. According to an embodiment, the second seated groove 701 may have a shape further recessed from the bottom, and at least a portion of the stepped portion 73 may be inserted into the second seated groove 701.

According to an embodiment, the first seated groove 70 may include the first protrusion 71 that extends along an outer edge. According to an embodiment, the first protrusion 71 may be a portion inserted into the stepped portion 73, and may further include second protrusions 710 and 711 protruding toward the first portion at both end portions. The second protrusions 710 and 711 may be inserted to the stepped portion 73 and support a coupled state of the stepped portion 73.

According to an embodiment, when the stepped portion 73 is seated in the first seated groove 70, a dust collection groove 730 may be formed between the stepped portion 73 and the second portion 432 of the inner housing. According to an embodiment, the dust collection groove 730 may be arranged between an inclined surface 730a formed along an inner edge of the stepped portion 73 and an inner wall 4321 of the second portion 4321. According to an embodiment, the dust collection groove 730 may extend along the inner edge of the stepped portion 73, and extend along an edge of the second portion 432 of the inner housing.

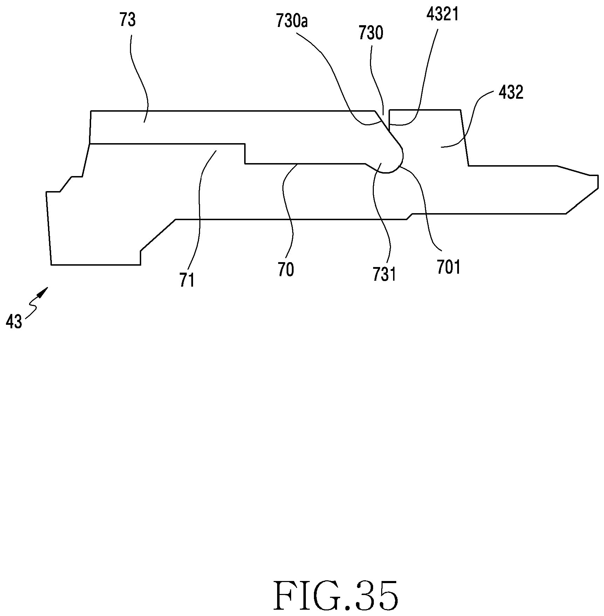

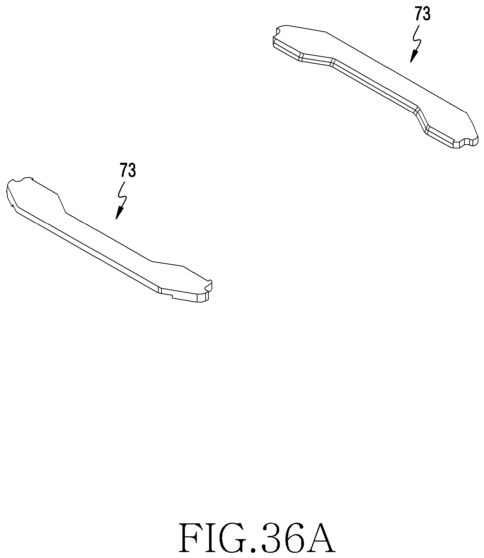

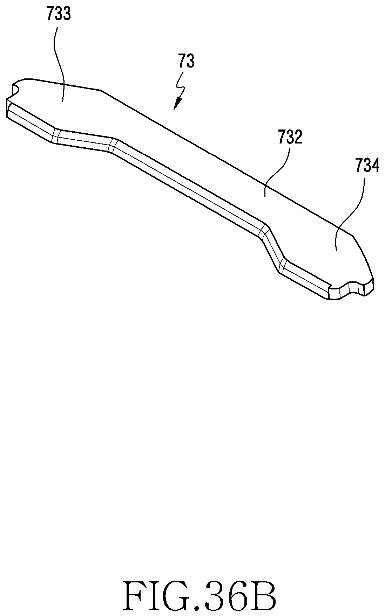

Referring to FIGS. 35, 36A and 36B, the stepped portion 73 of an embodiment may include a base 732, two end portions 733 and 734 each extending from the base 732, and a protrusion portion 731 formed on a bottom portion of the base 73. According to an embodiment, grooves for inserting the first protrusion 71 and second protrusions 710 and 711 formed on a surface facing the first seated groove 70 of the inner housing 43 may be formed in the stepped portion 73.

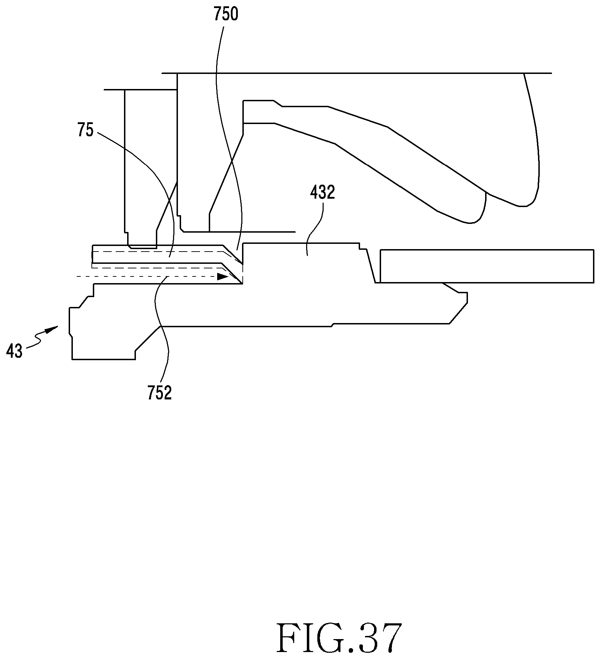

Referring to FIG. 37, the same structure of the inner housing 43 having the stepped portion 75 of an embodiment as the structure of the inner housing 43 having the stepped portion illustrated in FIG. 11 will be omitted to avoid repeated description and only different portions will be described.

According to an embodiment, the inner housing 43 may include the stepped portion 75 extending in the horizontal direction from the second portion 432. According to an embodiment, one end of the stepped portion 75 may be an end fixed to the second portion 432, and the other end may be a free end. According to an embodiment, the stepped portion 75 may include a dust collection groove 750 between an inner edge of the inner housing 43 and the second portion 432. According to an embodiment, the dust collection groove 750 may extend along an outer edge of the second portion 432.

According to an embodiment, an opening 752 of the stepped portion 75 may be formed in a downward direction. According to an embodiment, the opening 752 may extend in the horizontal direction along the stepped portion.

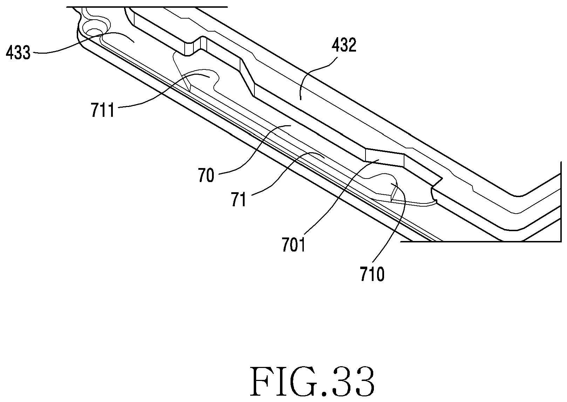

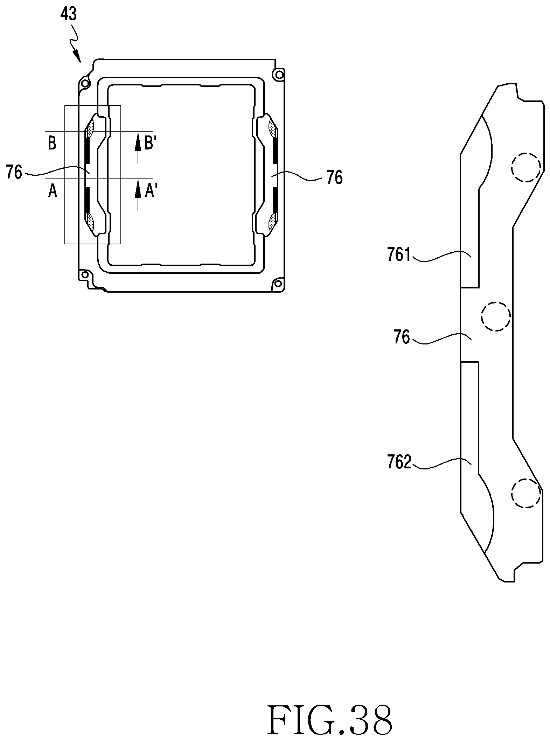

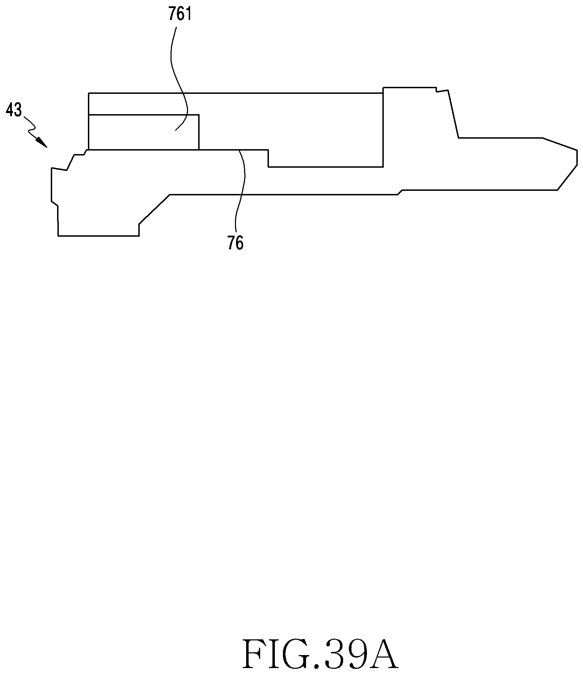

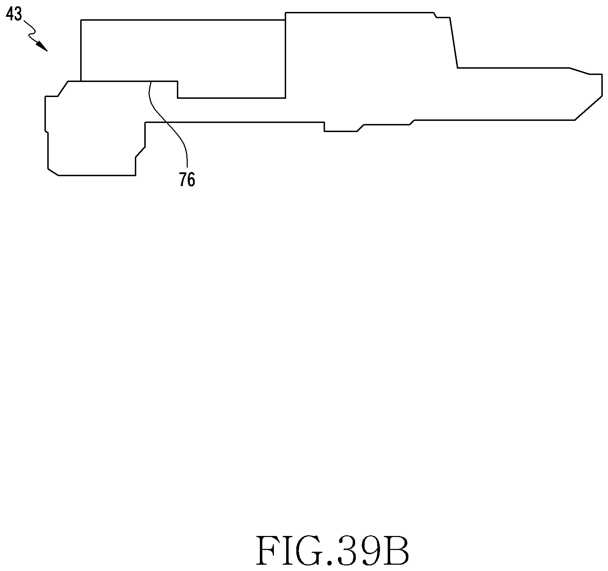

Referring to FIGS. 38, 39A, and 39B, the same structure of a seating portion 76 of an embodiment as the structure of a first seating portion illustrated in FIG. 33 will omitted to avoid repeated description, and only a different structure will be described.

According to an embodiment, the seating portion 76 of the inner housing into which the stepped portion is inserted may include a first protrusion 761 and a second protrusion 762. The first protrusion illustrated in FIG. 33 has a shape extending in one direction, but the seating portion 76 illustrated in FIG. 38 may be formed in a state where protrusions are spaced apart as the first protrusion 761 and the second protrusion 762. According to an embodiment, the first protrusion 761 and the second protrusion 762 may be formed symmetrical to each other, and may each be a shape extending along an outer edge of the first seated groove 76. The end portions of the first protrusion 761 and second protrusion 762 may be formed to have slightly larger widths, respectively.

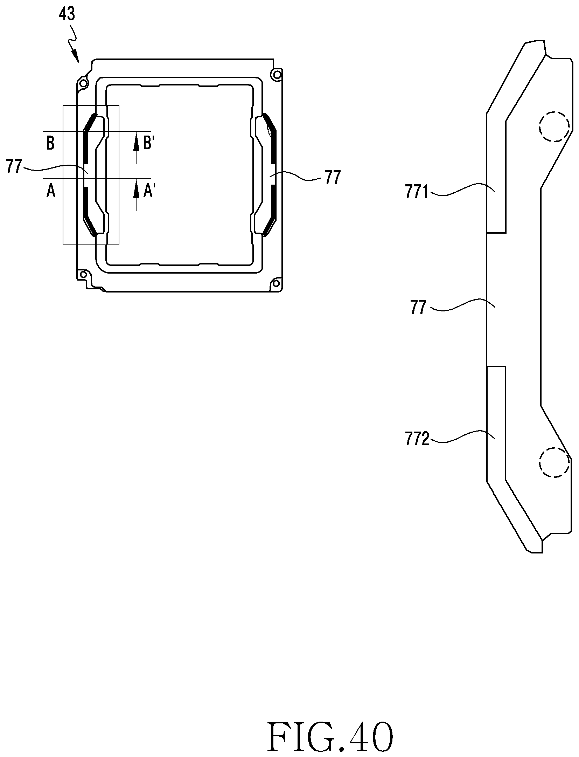

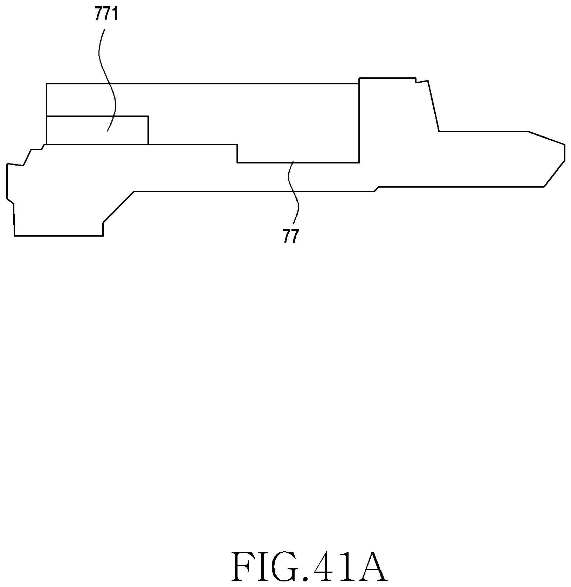

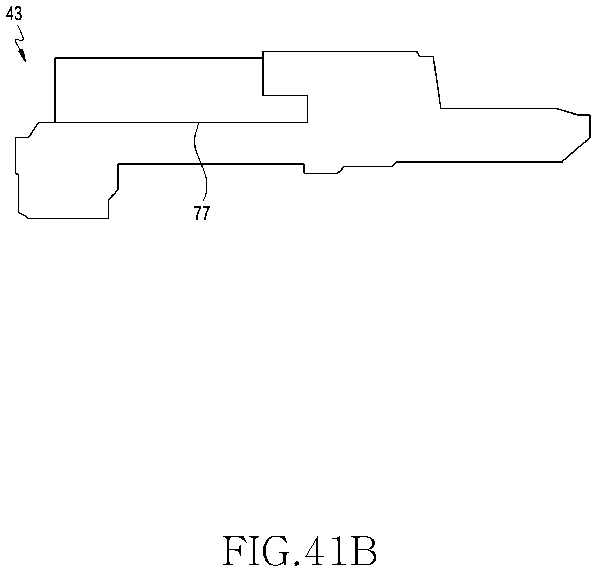

Referring to FIGS. 40, 41A, and 41B, the same structure of a seating portion 77 of an embodiment as the structure of the first seating portion illustrated in FIG. 33 will be omitted to avoid repeated description, and only a different structure will be described.

According to an embodiment, the seating portion 77 of the inner housing 43 into which the stepped portion is inserted may include a first protrusion 771 and a second protrusion 772. The first protrusion illustrated in FIG. 33 has a shape extending in one direction, but the seating portion 77 illustrated in FIG. 40 may be formed in a state where protrusions are spaced apart as the first protrusion 771 and the second protrusion 772. According to an embodiment, the first protrusion 771 and the second protrusion 771 may be formed symmetrical to each other, and may each be a shape extending along an outer edge of the seated groove 77. An end portion of each of the first protrusion 771 and the second protrusion 772 may be a shape extending in an inclined direction, at a width different from the width of the first protrusion and the second protrusion illustrated in FIG. 38.

According to an embodiment, a coupling structure between the stepped portion and the seating portion may additionally add a protrusion - groove coupling structure and support a coupling state between the stepped portion and the seating portion.

According to an embodiment, an electronic device may include a housing, and at least one camera lens module arranged in the housing. The camera lens module may include a cover member, a camera housing assembled with the cover member and configured to accommodate a lens module having a lens barrel along an optical axis and a lens driving unit arranged to surround the lens module and present power for performing self-focusing and optical image stabilization of the lens module, an inner housing having a filter arranged therein, assembled with the camera housing, and including a contact region contacting at least part of the lens barrel, a printed circuit board coupled to the camera housing and facing the filter, and a dustproof structure arranged between the lens barrel and the inner housing. The dustproof structure may include at least one support stand protruding at one end of the lens barrel, and a plurality of portions formed in the contact region and contacting the support stand.

According to an embodiment, the inner housing may include a first portion including a first surface and configured to seat the filter, a second portion including a second surface, configured to present an attaching area for attaching a protective member of the filter, and formed along a circumference of a periphery of the first portion, a third portion including a third surface, configured to present a base for coupling with the camera housing, and formed along a circumference of the second portion, and a stepped portion formed between the second portion and the third portion, formed outside the second portion, and extending along a region contacting the support stand.

According to an embodiment, the stepped portion may be higher than the third portion and be lower than the second portion.

According to an embodiment, the inner housing may include a pair of long sides, and a pair of short sides respectively arranged between the pair of long sides, and the stepped portion may include a first stepped portion and a second stepped portion respectively formed along the long sides.

According to an embodiment, the support stand may include a first support stand formed at one side of the lens barrel, and a second support stand and a third support stand spaced apart from each other and formed at the other side of the lens barrel. The first support stand may be configured to contact the first stepped portion and form a first contact area, the second support stand and the third support stand may be configured to contact the second stepped portion and form a second contact area, and the width of the first support stand may be configured to roughly correspond to the width of the sum of the second support stand and the third support stand.

According to an embodiment, the stepped portion may include a fourth surface, and include a first inclined surface formed between the fourth surface and the second surface.

According to an embodiment, the first inclined surface may be a curved surface whose curved angle increases as it approaches the second surface from the fourth surface.

According to an embodiment, the first inclined surface may be a flat surface.

According to an embodiment, a second inclined surface may be formed at an end portion, which contacts the first inclined surface, of each of the first support stand to the third support stand, and the second inclined surface may be a curved surface.

According to an embodiment, an adhesive layer for collecting dust or foreign substances may be further disposed on the fourth surface.

According to an embodiment, a gap between the support stand and the stepped portion may be less than a distance between the lens and the filter.

According to an embodiment, the stepped portion may be formed of a material different from a material of the inner housing, and the stepped portion may include an elastic material.

According to an embodiment, the electronic device may further include a dust trap groove along an inner edge of the stepped portion, when the stepped portion is seated in the inner housing.

According to an embodiment, the inner housing may include a first seated groove in which the stepped portion is seated, and the first seated groove may include a first protrusion for being inserted with at least a portion of the stepped portion, the first protrusion extending along an outer edge of the stepped portion.

## Claims

1. An electronic device comprising:
a housing; and
at least one camera lens module arranged in the housing,
wherein the camera lens module comprises:
a cover member;
a camera housing assembled with the cover member and configured to accommodate a lens module which comprises at least one lens and has a lens barrel comprising at least one support stand formed at one end, and a lens driving unit which is arranged to surround the lens module and presents power for performing self-focusing and optical image stabilization of the lens module;
an inner housing having a filter arranged therein, assembled with the camera housing, and comprising at least one contact region contacting the support stand;
a printed circuit board coupled to the camera housing and facing the filter; and
a dust trap arranged between the inner housing,
wherein the dust trap comprises at least one stepped portion formed in the contact region and configured to cover the contact region, and comprising a shape corresponding to the shape of the support stand.

2. The electronic device of claim 1, wherein the inner housing comprises:
a first portion comprising a first surface and configured to seat the filter;
a second portion comprising a second surface, configured to present an attaching area for attaching a protective member of the filter, and formed along a circumference of a periphery of the first portion; and
a third portion comprising a third surface, configured to present a base for coupling with the camera housing, and formed along a circumference of the second portion,
wherein the stepped portion is formed between the second portion and the third portion.

3. The electronic device of claim 2, wherein the stepped portion has a shape extending along a region contacting the support stand.

4. The electronic device of claim 2, wherein the stepped portion has a height higher than the third portion and lower than the second portion.

5. The electronic device of claim 2, wherein the inner housing comprises:
a pair of long sides; and
a pair of short sides respectively arranged between the pair of long sides, and
the stepped portion comprises a first stepped portion and a second stepped portion respectively formed along the long sides.

6. The electronic device of claim 5, wherein the support stand comprises:
a first support stand formed at one side of the lens barrel; and
a second support stand and a third support stand spaced apart from each other and formed at the other side of the lens barrel,
wherein the first support stand is configured to contact the first stepped portion and form a first contact area,
the second support stand and the third support stand are configured to contact the second stepped portion and form a second contact area, and
the width of the first support stand is configured to roughly correspond to the width of the sum of the second support stand and the third support stand.

7. The electronic device of claim 6, wherein the stepped portion comprises a fourth surface comprising a shape corresponding to the support stand, and
further comprises a first inclined surface formed between the fourth surface and the second surface.

8. The electronic device of claim 7, wherein the first inclined surface is a curved surface whose curved angle increases as it approaches the second surface from the fourth surface.

9. The electronic device of claim 7, wherein the first inclined surface is a flat surface.

10. The electronic device of claim 7, wherein a second inclined surface is further formed at an end portion, which contacts the first inclined surface, of each of the first support stand to the third support stand, and the second inclined surface is a curved surface.

11. The electronic device of claim 7, wherein an adhesive layer for collecting dust or foreign substances is further disposed on the fourth surface.

12. The electronic device of claim 1, wherein a gap between the support stand and the stepped portion is less than a distance between the lens and the filter.

13. The electronic device of claim 1, wherein the stepped portion is formed of a material different from a material of the inner housing, and the stepped portion comprises an elastic material.

14. The electronic device of claim 1, further comprising a dust trap groove along an inner edge of the stepped portion, when the stepped portion is seated in the inner housing.

15. The electronic device of claim 13, wherein the inner housing comprises a first seated groove in which the stepped portion is seated, and
the first seated groove comprises a first protrusion for being inserted with at least a portion of the stepped portion, the first protrusion extending along an outer edge of the stepped portion.
